# EUROPEAN PATENT APPLICATION

(11) **EP 1 304 586 A2**
(43) Date of publication of application: **23.04.2003**
(21) Application number: 02023289.8
(22) Date of filing: 17.10.2002
(51) Int. Cl.: G02B 5/30, G02B 5/18

(54) **Optical element, method of manufacturing the optical element and optical head using the optical element**

(30) Priority: 19.10.2001 JP 2001321652
(71) Applicant: Matsushita Electric Industrial Co., Ltd., Kadoma-shi, Osaka-fu, 571-8501 (JP)
(72) Inventor: Nagata, Takayuki, Hirakata-shi, Osaka 573-1194 (JP); Hayashi, Takao, Toyonaka-shi, Osaka 560-0011 (JP); Tomita, Hironori, Ikoma-shi, Nara 630-0141 (JP); Arai, Akihiro, Soraku-gun, Kyoto 619-0225 (JP); Nakamura, Tohru, Katano-shi, Osaka 576-0022 (JP)
(74) Representative: Hinkelmann, Klaus

(57) **Abstract**

An optical element is composed of a first substrate (11) and a second substrate (12) that are joined to each other. The first substrate (11) is composed of a plurality of transparent base materials joined to each other through a first joint surface (11a) on which an optical film is formed. The second substrate (12) is composed of a plurality of transparent base materials joined to each other through at least two second joint surfaces (12a) to (12c) parallel to each other. On each of the second joint surfaces, an optical film is formed. One part of light incident on the first substrate (11) is reflected from the first joint surface (11a) to be incident on the second substrate(12), and at least one part thereof is reflected from at least one of the second joint surfaces. A virtual plane including an incident light axis and a reflected light axis on the first joint surface (11a) and a virtual plane including incident light axes and reflected light axes on the respective second joint surfaces (12a) to(12c) form an angle of substantially 45 degrees. This allows an optical element to be manufactured at a reduced cost, in which no diffraction grating is provided on an optical path from a light source to an optical disk, so that a high light utilization efficiency can be attained, and the degradation in signal quality can be prevented.

## Description

The present invention relates to an optical element, a method of manufacturing the optical element, and an optical head for recording and reproducing information using the optical element.

In relation to optical heads for performing recording and reproduction of information with respect to optical disks using laser beams, conventionally, studies have been made to achieve further size and cost reduction for a unit. This can be seen from, for example, a known example of optical heads for magneto-optical recording disclosed in JP10(1998)-143934 A.

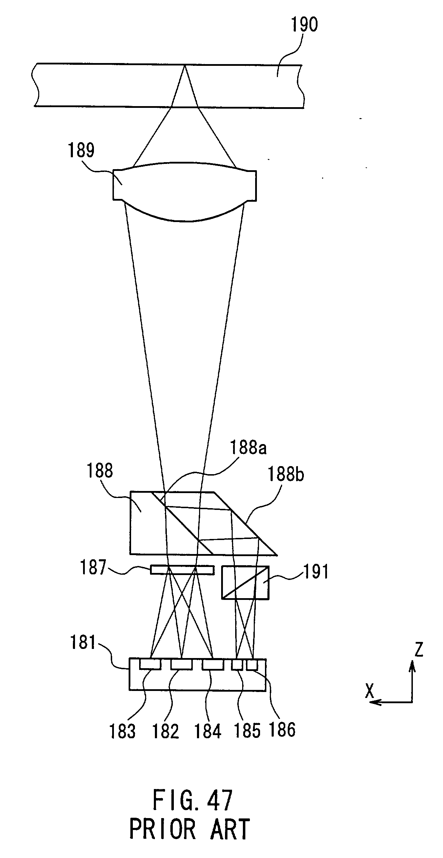

FIG. 47 shows a configuration of a conventional optical head as described above, which will be explained in the following description with reference to the figure. In FIG. 47, reference numerals 181 and 182 denote a silicon substrate and a semiconductor laser that emits light polarized in an x-axis direction in the figure, respectively. Further, reference numerals 183 and 184 denote light-receiving portions for detecting focus error signals and tracking error signals, and reference numerals 185 and 186 denote light-receiving portions for detecting magneto-optical signals. The semiconductor laser 182 and the light-receiving portions 183 to 186 are integrated on the silicon substrate 181. Further, reference numeral 187 denotes a diffraction element having a diffraction efficiency non-dependent upon a polarization direction of incident light. The diffraction element has a function of transmitting substantially 70% of an incident light beam, diffracting the light beam as ±1st-orde diffracted light beams of substantially 10% each, and leading the ±1st-orde diffracted light beams to the light-receiving portions 183 and 184, respectively.

Furthermore, reference numeral 188 denotes a polarizing prism in which an optical surface 188a with a polarization-dependent optical film and a reflective surface 188b are provided. In the following description, a polarization property on an optical surface will be explained. In the description, polarized light in a plane including a normal vector of the optical surface 188a and the x axis in the figure is referred to as P-polarized light, and polarized light in a plane obtained by rotating a polarization plane of the P-polarized light 90 degrees around an optical axis is referred to as S-polarized light. The optical surface 188a has a function of transmitting substantially 80% of a P-polarized light component while reflecting substantially 20% of the P-polarized light component and reflecting substantially 100% of an S-polarized light component. In the figure, reference numerals 189, 190 and 191 denote an objective lens, an optical disk on which magneto-optical signals are recorded, and a Wollaston polarizing prism formed of a birefringent material such as lithium niobate or the like, respectively.

In the conventional optical head having the above-mentioned configuration, a light beam emitted from the semiconductor laser 182 is transmitted through the diffraction element 187 and the polarizing prism 188 and focused on the optical disk 190 by the objective lens 189. The light beam whose polarization direction is rotated slightly by the Kerr effect on the optical disk 190 is reflected therefrom, and then is transmitted again through the objective lens 189 to be incident on the polarizing prism 188. Of the light beam, substantially 80% of a P-polarized light component is transmitted through the optical surface 188a, and substantially 20% of the P-polarized light component and substantially 100% of an S-polarized light component generated by Kerr rotation are reflected from the optical surface 188a.

In the diffraction element 187, of the transmitted light beam through the optical surface 188a, light beams of 10% each are diffracted as ±1st-order diffracted light beams to be received by the light-receiving portions 183 and 184, respectively. By performing a calculation on light-receiving signals thus obtained, a focus error signal and a tracking error signal can be obtained, though the description does not go into details on a principle of light detection. The reflected light beam from the optical surface 188a is reflected from the reflective surface 188b, and then is separated into polarized light components orthogonal to each other in the Wollaston polarizing prism 191. The polarized light components are received by the light-receiving portions 185 and 186, respectively. Based on a difference between light-receiving signals thus obtained, a magneto-optical signal can be detected.

However, the above-mentioned conventional optical head has presented a problem of a cost increase resulting from the following factors. That is, in the optical head, light splitting requires three elements, namely the polarizing prism 188, the diffraction element 187 and the Wollaston polarizing prism 191. Further, a birefringent material such as lithium niobate is used as a material of the Wollaston polarizing prism 191 for separating light into polarized light components. Because of these factors, the achievement of a cost reduction has been hindered.

Furthermore, the following problems also have been presented. That is, when a light beam emitted from the semiconductor laser 182 passes through the diffraction element 187, in addition to 0th-order light that is used for signal detection, 1st-order diffracted light is generated. This causes a decrease in light utilization efficiency, which is a ratio of an amount of 0th-order light focused on an optical disk to a light amount of a light source. Further, the 1st-order diffracted light is incident on the objective lens 189 to be focused on the optical disk 190, and the light reflected therefrom is led onto the light-receiving portions 183 and 184 and the light-receiving portions 185 and 186. This affects the detection of focus error signals, tracking error signals and magneto-optical signals, resulting in lowered accuracy of a servo operation and degradation in magneto-optical signal quality.

A first object of the present invention is to provide an optical element that can be manufactured at a reduced cost. Further, a second object of the present invention is to provide an optical element having a high light utilization efficiency. Furthermore, a third object of the present invention is to provide an optical element in which a diffraction grating is not provided on an optical path from a light source to an optical disk so that stray light originating in 1st-order diffracted light, which causes degradation in qualities of a servo signal and an RF signal, is prevented from being generated. In addition, the present invention provides an optical head using an optical element as described above and a method of manufacturing the optical element.

A first optical element according to the present invention is composed of a first substrate and a second substrate that are joined to each other. The first substrate is composed of a plurality of transparent base materials joined to each other through one or more first joint surfaces. On each of the first joint surfaces, a functional element formed of a diffraction grating or an optical film is formed. The second substrate is composed of a plurality of transparent base materials joined to each other through at least two second joint surfaces parallel to each other. On each of the second joint surfaces, a functional element formed of a diffraction grating or an optical film is formed. At least one part of light incident on the first substrate is reflected from at least one of the first joint surfaces to be incident on the second substrate, and at least one part thereof is reflected from at least one of the second joint surfaces. Further, a virtual plane including an incident light axis and a reflected light axis on the first joint surface and a virtual plane including an incident light axis and a reflected light axis on the second joint surface form an angle of substantially 45 degrees.

Preferably, the aforementioned first optical element has the following configuration. That is, a polarizing film having a transmittance and a reflectance with respect to a P-polarized light component different from those with respect to an S-polarized light component is formed on at least one of the first joint surfaces. At least one of the second joint surfaces is disposed on an optical path of a light beam resulting from light splitting at the first joint surface. A non-polarizing film that transmits one part of the light beam while reflecting another part of the light beam is formed on the at least one of the second joint surfaces. A polarizing film that substantially transmits a P-polarized light component and substantially reflects an S-polarized light component is formed on at least one of the other second joint surfaces.

In the present invention, "to transmit substantially" indicates a state where not less than 97% of incident light is transmitted. Further, "to reflect substantially" indicates a state where not less than 97% of incident light is reflected.

Preferably, the aforementioned first optical element has the following configuration. That is, a polarizing film having a transmittance and a reflectance with respect to a P-polarized light component different from those with respect to an S-polarized light component is formed on at least one of the first joint surfaces. At least one of the second joint surfaces is disposed on an optical path of a light beam resulting from light splitting at ,the first joint surface. A polarizing film that substantially transmits a P-polarized light component and substantially reflects an S-polarized light component is formed on the at least one of the second joint surfaces.

Preferably, the aforementioned first optical element has the following configuration. That is, a polarizing film having a transmittance and a reflectance with respect to a P-polarized light component different from those with respect to an S-polarized light component is formed on at least one of the first joint surfaces. At least one of the second joint surfaces is disposed on an optical path of a light beam resulting from light splitting at the first joint surface. A reflective diffraction grating is formed on the at least one of the second joint surfaces. A polarizing film that substantially transmits a P-polarized light component and substantially reflects an S-polarized light component is formed on at least one of the other second joint surfaces.

Preferably, in the aforementioned first optical element, the second substrate is inclined at a predetermined angle with respect to a light-emitting surface of the optical element.

Preferably, the aforementioned first optical element has the following configuration. That is, a polarizing film having a transmittance and a reflectance with respect to a P-polarized light component different from those with respect to an S-polarized light component is formed on at least one of the first joint surfaces. A reflective diffraction grating is formed on at least one of the other first joint surfaces. At least one of the second joint surfaces is disposed on an optical path of a light beam reflected from the reflective diffraction grating. A polarizing film that substantially transmits a P-polarized light component and substantially reflects an S-polarized light component is formed on the at least one of the second joint surfaces.

A second optical element according to the present invention is composed of a first substrate, a second substrate and a diffraction substrate that are joined in this order. The first substrate is composed of a plurality of transparent base materials joined to each other through one or more first joint surfaces. On each of the first joint surfaces, a functional element formed of an optical film is formed. The second substrate is composed of a plurality of transparent base materials joined to each other through at least two second joint surfaces parallel to each other. On each of the second joint surfaces, a functional element formed of an optical film is formed. The diffraction substrate has a diffraction grating provided on one face. At least one part of light incident on the first substrate is reflected from at least one of the first joint surfaces to be incident on the second substrate, and at least one part thereof is reflected from at least one of the second joint surfaces. Further, a virtual plane including an incident light axis and a reflected light axis on the first joint surface and a virtual plane including an incident light axis and a reflected light axis on the second joint surface form an angle of substantially 45 degrees.

Preferably, the aforementioned second optical element has the following configuration. That is, a polarizing film having a transmittance and a reflectance with respect to a P-polarized light component different from those with respect to an S-polarized light component is formed on at least one of the first joint surfaces. At least one of the second joint surfaces is disposed on an optical path of a light beam resulting from light splitting at the first joint surface. A polarizing film that substantially transmits a P-polarized light component and substantially reflects an S-polarized light component is formed on the at least one of the second joint surfaces.

A third optical element according to the present invention is composed of a first substrate, a second substrate and a third substrate that are joined in this order. The first substrate is composed of a plurality of transparent base materials joined to each other through one or more first joint surfaces. On each of the first joint surfaces, a functional element formed of an optical film is formed. The second substrate is composed of a plurality of transparent base materials joined to each other through at least two second joint surfaces parallel to each other. On each of the second joint surfaces, a functional element formed of an optical film is formed. The third substrate is composed of a plurality of transparent base materials joined to each other through at least two third joint surfaces parallel to each other. On each of the third joint surfaces, a functional element formed of an optical film is formed. At least one part of light incident on the first substrate is reflected from at least one of the first joint surfaces to be incident on the second substrate. Of the light that has been incident on the second substrate, one part is reflected from at least one of the second joint surfaces, and the rest is transmitted through the at least one of the second joint surfaces to be incident on the third joint surfaces. Further, a virtual plane including an incident light axis and a reflected light axis on the first joint surface and a virtual plane including an incident light axis and a reflected light axis on the second joint surface form an angle of substantially 45 degrees.

Preferably, the aforementioned third optical element has the following configuration. That is, a polarizing film having a transmittance and a reflectance with respect to a P-polarized light component different from those with respect to an S-polarized light component is formed on at least one of the first joint surfaces. At least one of the second joint surfaces is disposed on an optical path of a light beam resulting from light splitting at the first joint surface. A polarizing film that substantially transmits a P-polarized light component and substantially reflects an S-polarized light component is formed on the at least one of the second joint surfaces. At least one of the third joint surfaces is disposed on an optical path of a light beam resulting from light splitting at the second joint surfaces. A non-polarizing film that transmits one part of the light beam while reflecting another part of the light beam is formed on the at least one of the third joint surfaces.

Preferably, in the aforementioned third optical element, the virtual plane including the incident light axis and the reflected light axis on the first joint surface and a virtual plane including an incident light axis and a reflected light axis on the third joint surface are substantially parallel to each other.

A fourth optical element according to the present invention is composed of a first substrate, a second substrate and a third substrate that are joined in this order. The first substrate is composed of one transparent base material or a plurality of transparent base materials joined to each other. The second substrate is composed of a plurality of transparent base materials joined to each other through at least two second joint surfaces parallel to each other. On each of the second joint surfaces, a functional element formed of an optical film is formed. The third substrate is composed of one transparent base material or a plurality of transparent base materials joined to each other. At least one part of light incident on the first substrate is reflected from a first joint surface between the first substrate and the second substrate to be incident on the second substrate, and at least one part thereof is reflected from at least one of the second joint surfaces. Further, a virtual plane including an incident light axis and a reflected light axis on the first joint surface and a virtual plane including an incident light axis and a reflected light axis on the second joint surface form an angle of substantially 45 degrees.

Preferably, the aforementioned fourth optical element has the following configuration. That is, a polarizing film having a transmittance and a reflectance with respect to a P-polarized light component different from those with respect to an S-polarized light component is formed on the first joint surface. A polarizing film that substantially transmits a P-polarized light component and substantially reflects an S-polarized light component is formed on at least one of the second joint surfaces.

A fifth optical element according to the present invention is composed of a first substrate and a second substrate that are joined to each other. The first substrate is composed of a plurality of transparent base materials and a 1/4 wavelength plate that are joined to each other, and at least one of joint surfaces between the plurality of transparent base materials is a first joint surface on which a functional element formed of an optical film is formed. The second substrate is composed of a plurality of transparent base materials joined to each other through at least two second joint surfaces parallel to each other. On each of the second joint surfaces, a functional element formed of an optical film is formed. Further, a polarizing film that substantially transmits a P-polarized light component and substantially reflects an S-polarized light component is formed on the first joint surface.

An optical head according to the present invention includes a light source that emits linearly polarized light, an objective lens that focuses the light emitted from the light source on an information recording medium, any one of the aforementioned first to fifth optical elements according to the present invention that is disposed on an optical path between the light source and the objective lens, and a photodetector that receives the light from the information recording medium, which is split into a plurality of light beams by the optical element.

Preferably, in the aforementioned optical head according to the present invention, the light source and the photodetector are provided in a common housing.

Preferably, the aforementioned optical head according to the present invention has the following configuration. That is, of the plurality of light beams resulting from light splitting by the optical element that are directed towards the photodetector, one of a pair of light beams is focused on a near side of a light-receiving surface on the photodetector with respect to the optical element, and the other is focused on a far side of the light-receiving surface on the photodetector with respect to the optical element. Each of the pair of light beams is received by a three-divided light-receiving region on the photodetector so that a focus error signal is obtained by performing a calculation.

Preferably, the aforementioned optical head according to the present invention has the following configuration. That is, at least one of the plurality of light beams resulting from light splitting by the optical element that are directed towards the photodetector is received by a multi-divided light-receiving region on the photodetector so that a tracking error signal is obtained by performing a calculation.

A first method of manufacturing an optical element according to the present invention includes steps of: obtaining a first substrate; obtaining a second substrate; obtaining a composite member; and cutting the composite member. In the step of obtaining the first substrate, a first laminate member is used that is composed of a plurality of transparent substrates joined to each other through a first joint surface on which a functional element formed of a diffraction grating or an optical film is formed. The first laminate member is cut along a plurality of first cutting surfaces parallel to each other that cross the first joint surface at an angle of substantially 45 degrees so that at least one of the first joint surfaces is provided in the first substrate. In the step of obtaining the second substrate, a second laminate member is used that is composed of a plurality of transparent substrates joined to each other through a second joint surface on which a functional element formed of a diffraction grating or an optical film is formed. The second laminate member is cut along a plurality of second cutting surfaces parallel to each other that cross the second joint surface at an angle of substantially 45 degrees so that at least two of the second joint surfaces are provided in the second substrate. In the step of obtaining the composite member, one of the first cutting surfaces and one of the second cutting surfaces are joined so that a first direction of the first substrate and a second direction of the second substrate form an angle of substantially 45 degrees, thereby obtaining the composite member in which the first substrate and the second substrate are joined to each other, where a direction that is orthogonal to a straight line at which the first cutting surface and the first joint surface cross each other, and is parallel to the first cutting surface is the first direction of the first substrate, and a direction that is orthogonal to a straight line at which the second cutting surface and the second joint surface cross each other, and is parallel to the second cutting surface is the second direction of the second substrate.

A second method of manufacturing an optical element according to the present invention includes steps of: forming a functional element formed of an optical film on one face of a first glass plate; obtaining a second substrate; obtaining a composite member; and cutting the composite member. In the step of obtaining the second substrate, a second laminate member is used that is composed of a plurality of transparent substrates joined to each other through a second joint surface on which a functional element formed of an optical film is formed. The second laminate member is cut along a plurality of second cutting surfaces parallel to each other that cross the second joint surface at an angle of substantially 45 degrees so that at least two of the second joint surfaces are provided in the second substrate. In the step of obtaining the composite member, one of the second cutting surfaces of the second substrate is joined to the optical film of the first glass plate, and the other of the second cutting surfaces of the second substrate is joined to a third glass plate, thereby obtaining the composite member in which the first glass plate, the second substrate and the third glass plate are joined in this order.

A third method of manufacturing an optical element according to the present invention includes steps of: obtaining a first substrate; obtaining a second substrate; obtaining a composite member; and cutting the composite member. In the step of obtaining the first substrate, a first laminate member is used that is composed of a plurality of transparent substrates joined to each other through a first joint surface on which a functional element formed of an optical film is formed. The first laminate member is cut along a plurality of first cutting surfaces parallel to each other that cross the first joint surface at an angle of substantially 45 degrees so that at least one of the first joint surfaces is provided in the first substrate. In the step of obtaining the second substrate, a second laminate member is used that is composed of a plurality of transparent substrates joined to each other through a second joint surface on which a functional element formed of an optical film is formed. The second laminate member is cut along a plurality of second cutting surfaces parallel to each other that cross the second joint surface at an angle of substantially 45 degrees so that at least two of the second joint surfaces are provided in the second substrate. In the step of obtaining the composite member, one of the first cutting surfaces and one of the second cutting surfaces are joined so that a first direction of the first substrate and a second direction of the second substrate form an angle of substantially 45 degrees, and the second substrate is joined to a glass plate, thereby obtaining the composite member in which the first substrate, the second substrate and the glass plate are joined in this order, where a direction that is orthogonal to a straight line at which the first cutting surface and the first joint surface cross each other, and is parallel to the first cutting surface is the first direction of the first substrate, and a direction that is orthogonal to a straight line at which the second cutting surface and the second joint surface cross each other, and is parallel to the second cutting surface is the second direction of the second substrate.

Preferably, in the aforementioned third method, the glass plate has a diffraction grating on one face, and the other face of the glass plate opposite the face on which the diffraction grating is provided is joined to the second substrate.

A fourth method of manufacturing an optical element according to the present invention includes steps of: obtaining a first substrate; obtaining a second substrate; obtaining a third substrate; obtaining a composite member; and cutting the composite member. In the step of obtaining the first substrate, a first laminate member is used that is composed of a plurality of transparent substrates joined to each other through a first joint surface on which a functional element formed of an optical film is formed. The first laminate member is cut along a plurality of first cutting surfaces parallel to each other that cross the first joint surface at an angle of substantially 45 degrees so that at least one of the first joint surfaces is provided in the first substrate. In the step of obtaining the second substrate, a second laminate member is used that is composed of a plurality of transparent substrates joined to each other through a second joint surface on which a functional element formed of an optical film is formed. The second laminate member is cut along a plurality of second cutting surfaces parallel to each other that cross the second joint surface at an angle of substantially 45 degrees so that at least two of the second joint surfaces are provided in the second substrate. In the step of obtaining the third substrate, a third laminate member is used that is composed of a plurality of transparent substrates joined to each other through a third joint surface on which a functional element formed of an optical film is formed. The third laminate member is cut along a plurality of third cutting surfaces parallel to each other that cross the third joint surface at an angle of substantially 45 degrees so that at least two of the third joint surfaces are provided in the third substrate. In the step of obtaining the composite member, one of the first cutting surfaces and one of the second cutting surfaces are joined so that a first direction of the first substrate and a second direction of the second substrate form an angle of substantially 45 degrees, and the second substrate is joined to the third substrate, thereby obtaining the composite member in which the first substrate, the second substrate and the third substrate are joined in this order, where a direction that is orthogonal to a straight line at which the first cutting surface and the first joint surface cross each other, and is parallel to the first cutting surface is the first direction of the first substrate, and a direction that is orthogonal to a straight line at which the second cutting surface and the second joint surface cross each other, and is parallel to the second cutting surface is the second direction of the second substrate.

Preferably, in the aforementioned fourth method, one of the second cutting surfaces and one of the third cutting surfaces are joined so that the first direction of the first substrate and a third direction of the third substrate are substantially parallel to each other, where the direction that is orthogonal to the straight line at which the first cutting surface and the first joint surface cross each other, and is parallel to the first cutting surface is the first direction of the first substrate, and a direction that is orthogonal to a straight line at which the third cutting surface and the third joint surface cross each other, and is parallel to the third cutting surface is the third direction of the third substrate.

A fifth method of manufacturing an optical element according to the present invention includes steps of: obtaining a first substrate; obtaining a second substrate; obtaining a composite member; and cutting the composite member. In the step of obtaining the first substrate, a first laminate member is used that is composed of a plurality of transparent substrates joined to each other through a first joint surface on which a functional element formed of an optical film is formed, and a 1/4 wavelength plate, which are joined to each other. The first laminate member is cut along a plurality of first cutting surfaces parallel to each other that cross the first joint surface at an angle of substantially 45 degrees so that at least one of the first joint surfaces is provided in the first substrate. In the step of obtaining the second substrate, a second laminate member is used that is composed of a plurality of transparent substrates joined to each other through a second joint surface on which a functional element formed of a diffraction grating or an optical film is formed. The second laminate member is cut along a plurality of second cutting surfaces parallel to each other that cross the second joint surface at an angle of substantially 45 degrees so that at least two of the second joint surfaces are provided in the second substrate. In the step of obtaining the composite member, one of the first cutting surfaces is joined to one of the second cutting surfaces, thereby obtaining the composite member in which the first substrate and the second substrate are joined to each other.

A sixth method of manufacturing an optical element according to the present invention includes steps of: obtaining a first substrate; obtaining a second substrate; obtaining a third substrate; obtaining a composite member; and cutting the composite member. In the step of obtaining the first substrate, a first laminate member is used that is composed of a plurality of transparent substrates joined to each other through a first joint surface on which a functional element formed of an optical film is formed. The first laminate member is cut along a plurality of first cutting surfaces parallel to each other that cross the first joint surface at an angle of substantially 45 degrees so that at least one of the first joint surfaces is provided in the first substrate. In the step of obtaining the second substrate, a second laminate member is used that is composed of a plurality of transparent substrates joined to each other through a second joint surface on which a functional element formed of an optical film is formed. The second laminate member is cut along a plurality of second cutting surfaces parallel to each other that cross the second joint surface at an angle of substantially 35 degrees so that at least two of the second joint surfaces are provided in the second substrate. In the step of obtaining the third substrate, the second substrate and transparent substrates are joined alternately, and a joined body thus obtained is cut along a plurality of third cutting surfaces parallel to each other that cross a third joint surface between the second substrate and the transparent substrates at an angle of substantially 45 degrees, thereby obtaining the third substrate. In the step of obtaining the composite member, one of the first cutting surfaces and one of the third cutting surfaces are joined so that a first direction of the first substrate and a third direction of the third substrate are parallel to each other, thereby obtaining the composite member in which the first substrate and the third substrate are joined to each other, where a direction that is orthogonal to a straight line at which the first cutting surface and the first joint surface cross each other, and is parallel to the first cutting surface is the first direction of the first substrate, and a direction that is orthogonal to a straight line at which the third cutting surface and the third joint surface cross each other, and is parallel to the third cutting surface is the third direction of the third substrate.

A seventh method of manufacturing an optical element according to the present invention includes steps of: obtaining a first substrate; obtaining a second substrate; obtaining a third substrate; obtaining a composite member; and cutting the composite member. In the step of obtaining the first substrate, a first laminate member is used that is composed of a plurality of transparent substrates joined to each other through a first joint surface on which a functional element formed of an optical film is formed. The first laminate member is cut along a plurality of first cutting surfaces parallel to each other that cross the first joint surface at an angle of substantially 45 degrees so that at least one of the first joint surfaces is provided in the first substrate. In the step of obtaining the second substrate, a second laminate member is used that is composed of a plurality of transparent substrates joined to each other through a second joint surface on which a functional element formed of an optical film is formed. The second laminate member is cut along a plurality of second cutting surfaces parallel to each other that cross the second joint surface at an angle of substantially 30 degrees so that at least two of the second joint surfaces are provided in the second substrate. In the step of obtaining the third substrate, the second substrate and transparent substrates are joined alternately, and a joined body thus obtained is cut along a plurality of third cutting surfaces parallel to each other that cross a third joint surface between the second substrate and the transparent substrates at an angle of substantially 35 degrees, thereby obtaining the third substrate. In the step of obtaining the composite member, one of the first cutting surfaces and one of the third cutting surfaces are joined so that a first direction of the first substrate and a third direction of the third substrate are parallel to each other, thereby obtaining the composite member in which the first substrate and the third substrate are joined to each other, where a direction that is orthogonal to a straight line at which the first cutting surface and the first joint surface cross each other, and is parallel to the first cutting surface is the first direction of the first substrate, and a direction that is orthogonal to a straight line at which the third cutting surface and the third joint surface cross each other, and is parallel to the third cutting surface is the third direction of the third substrate.

FIG. 1 is a schematic diagram showing a configuration of an optical head according to Embodiment 1 of the present invention.

FIG. 2A is a perspective view of a beam splitting element according to Embodiment 1 of the present invention.

FIG. 2B is a perspective exploded view of the beam splitting element according to Embodiment 1 of the present invention.

FIG. 3A is a schematic diagram showing optical paths in the beam splitting element according to Embodiment 1 of the present invention as seen from a positive side of an x axis.

FIG. 3B is a cross sectional view taken on line 3B - 3B of FIG. 3A.

FIG. 3C is a cross sectional view taken on line 3C - 3C of FIG. 3A.

FIG. 4 is an explanatory diagram showing the optical paths of the beam splitting element according to Embodiment 1 of the present invention.

FIG. 5 is a plan view of a photodetector according to Embodiment 1 of the present invention.

FIGs. 6A to 6E are explanatory diagrams showing process steps of fabricating the beam splitting element according to Embodiment 1 of the present invention in sequential order.

FIG. 7A is a perspective view of a beam splitting element according to another form of Embodiment 1 of the present invention.

FIG. 7B is a perspective exploded view of the beam splitting element according to another form of Embodiment 1 of the present invention.

FIG. 8A is a schematic diagram showing optical paths in the beam splitting element according to another form of Embodiment 1 of the present invention as seen from a positive side of an x axis.

FIG. 8B is a cross sectional view taken on line 8B - 8B of FIG. 8A.

FIG. 8C is a cross sectional view taken on line 8C - 8C of FIG. 8A.

FIG. 9A is a perspective view of a beam splitting element according to Embodiment 2 of the present invention.

FIG. 9B is a perspective exploded view of the beam splitting element according to Embodiment 2 of the present invention.

FIG. 10A is a schematic diagram showing optical paths in the beam splitting element according to Embodiment 2 of the present invention as seen from a positive side of an x axis.

FIG. 10B is a cross sectional view taken on line 10B - 10B of FIG. 10A.

FIG. 10C is a cross sectional view taken on line 10C - 10C of FIG. 10A.

FIG. 11 is an explanatory diagram showing the optical paths of the beam splitting element according to Embodiment 2 of the present invention.

FIG. 12 is a plan view of a photodetector according to Embodiment 2 of the present invention.

FIGs. 13A to 13E are explanatory diagrams showing process steps of fabricating the beam splitting element according to Embodiment 2 of the present invention in sequential order.

FIG. 14A is a perspective view of a beam splitting element according to Embodiment 3 of the present invention.

FIG. 14B is a perspective exploded view of the beam splitting element according to Embodiment 3 of the present invention.

FIG. 15A is a schematic diagram showing optical paths in the beam splitting element according to Embodiment 3 of the present invention as seen from a positive side of an x axis.

FIG. 15B is a cross sectional view taken on line 15B - 15B of FIG. 15A.

FIG. 15C is a cross sectional view taken on line 15C - 15C of FIG. 15A.

FIG. 16 is an explanatory diagram showing the optical paths of the beam splitting element according to Embodiment 3 of the present invention.

FIG. 17 is a plan view of a photodetector according to Embodiment 3 of the present invention.

FIG. 18A is a perspective view of a beam splitting element according to Embodiment 4 of the present invention.

FIG. 18B is a perspective exploded view of the beam splitting element according to Embodiment 4 of the present invention.

FIG. 19A is a schematic diagram showing optical paths in the beam splitting element according to Embodiment 4 of the present invention as seen from a positive side of an x axis.

FIG. 19B is a cross sectional view taken on line 19B - 19B of FIG. 19A.

FIG. 19C is a cross sectional view taken on line 19C - 19C of FIG. 19A.

FIG. 20 is an explanatory diagram showing the optical paths of the beam splitting element according to Embodiment 4 of the present invention.

FIG. 21 is a plan view of a photodetector according to Embodiment 4 of the present invention.

FIG. 22A is a perspective view of a beam splitting element according to Embodiment 5 of the present invention.

FIG. 22B is a perspective exploded view of the beam splitting element according to Embodiment 5 of the present invention.

FIG. 23A is a schematic diagram showing optical paths in the beam splitting element according to Embodiment 5 of the present invention as seen from a positive side of an x axis.

FIG. 23B is a cross sectional view taken on line 23B - 23B of FIG. 23A.

FIG. 23C is a cross sectional view taken on line 23C - 23C of FIG. 23A.

FIG. 23D is a cross sectional view taken on line 23D - 23D of FIG. 23A.

FIG. 24 is an explanatory diagram showing the optical paths of the beam splitting element according to Embodiment 5 of the present invention.

FIG. 25 is a plan view of a photodetector according to Embodiment 5 of the present invention.

FIG. 26A is a perspective view of a beam splitting element according to Embodiment 6 of the present invention.

FIG. 26B is a perspective exploded view of the beam splitting element according to Embodiment 6 of the present invention.

FIG. 27A is a schematic diagram showing optical paths in the beam splitting element according to Embodiment 6 of the present invention as seen from a positive side of an x axis.

FIG. 27B is a cross sectional view taken on line 27B - 27B of FIG. 27A.

FIG. 27C is a cross sectional view taken on line 27C - 27C of FIG. 27A.

FIG. 27D is a cross sectional view taken on line 27D - 27D of FIG. 27A.

FIG. 28 is an explanatory diagram showing the optical paths of the beam splitting element according to Embodiment 6 of the present invention.

FIG. 29 is a plan view of a photodetector according to Embodiment 6 of the present invention.

FIG. 30A is a perspective view of a beam splitting element according to another form of Embodiment 6 of the present invention.

FIG. 30B is a perspective exploded view of the beam splitting element according to another form of Embodiment 6 of the present invention.

FIG. 31A is a schematic diagram showing optical paths in the beam splitting element according to another form of Embodiment 6 of the present invention as seen from a positive side of an x axis.

FIG. 31B is a cross sectional view taken on line 31B - 31B of FIG. 31A.

FIG. 31C is a cross sectional view taken on line 31C - 31C of FIG. 31A.

FIG. 32 is an explanatory diagram showing the optical paths of the beam splitting element according to another form of Embodiment 6 of the present invention.

FIG. 33 is a plan view of a photodetector according to another form of Embodiment 6 of the present invention.

FIG. 34A is a perspective view of a beam splitting element according to Embodiment 7 of the present invention.

FIG. 34B is a perspective exploded view of the beam splitting element according to Embodiment 7 of the present invention.

FIG. 35 is a schematic diagram showing optical paths in the beam splitting element according to Embodiment 7 of the present invention.

FIG. 36 is an explanatory diagram showing the optical paths of the beam splitting element according to Embodiment 7 of the present invention.

FIG. 37 is a plan view of a photodetector according to Embodiment 7 of the present invention.

FIG. 38 is a schematic diagram showing a configuration of an optical head according to Embodiment 8 of the present invention.

FIG. 39 is a perspective exploded view of a main portion of the optical head according to Embodiment 8 of the present invention.

FIG. 40 is a schematic diagram showing a configuration of an optical head according to Embodiment 9 of the present invention.

FIG. 41A is a perspective view of a beam splitting element according to Embodiment 9 of the present invention.

FIG. 41B is a perspective exploded view of the beam splitting element according to Embodiment 9 of the present invention.

FIG. 42A is a schematic diagram showing optical paths in the beam splitting element according to Embodiment 9 of the present invention as seen from a positive side of an x axis.

FIG. 42B is a cross sectional view taken on line 42B - 42B of FIG. 42A.

FIG. 42C is a cross sectional view taken on line 42C - 42C of FIG. 42A.

FIG. 43 is an explanatory diagram showing the optical paths of the beam splitting element according to Embodiment 9 of the present invention.

FIG. 44 is a plan view of a photodetector according to Embodiment 9 of the present invention.

FIGs. 45A to 45D are explanatory diagrams showing process steps of fabricating the beam splitting element according to Embodiment 9 of the present invention in sequential order.

FIGs. 46A to 46F are explanatory diagrams showing process steps of fabricating the beam splitting element according to Embodiment 9 of the present invention.

FIG. 47 is a schematic diagram showing a configuration of a conventional optical head.

Hereinafter, the present invention will be described by way of embodiments with reference to the appended drawings.

### (Embodiment 1)

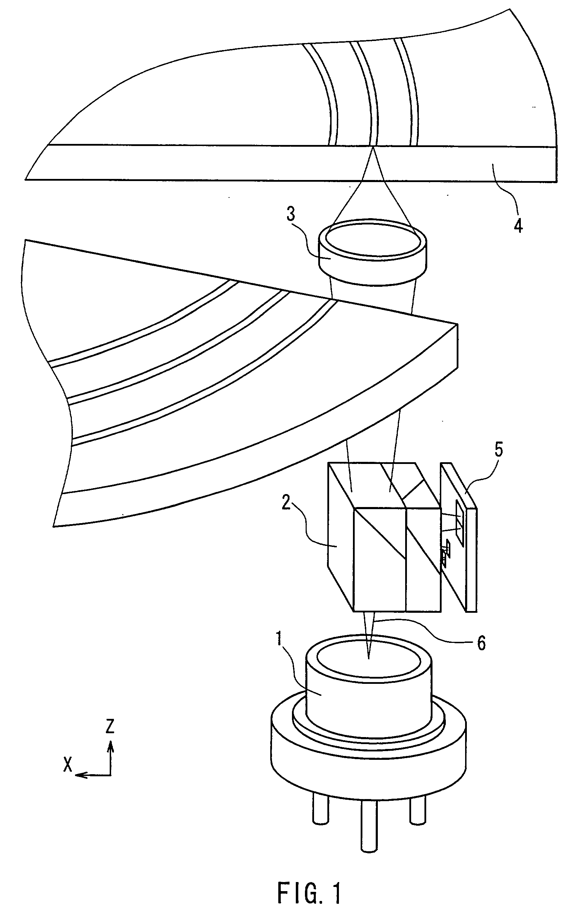

FIG. 1 is a schematic diagram showing a configuration of an optical head according to Embodiment 1 of the present invention. In the figure, reference numerals 1 and 2 denote a semiconductor laser disposed so that a polarization plane of emitted light coincides with an xz plane in the figure and a beam splitting element formed by combining laminates of a plurality of glass substrates, respectively. Further, reference numerals 3, 4, 5 and 6 denote an objective lens, an optical disk on which magneto-optical signals are recorded, a photodetector, and a light beam emitted from the semiconductor laser 1 or a light beam reflected from the optical disk 4, respectively.

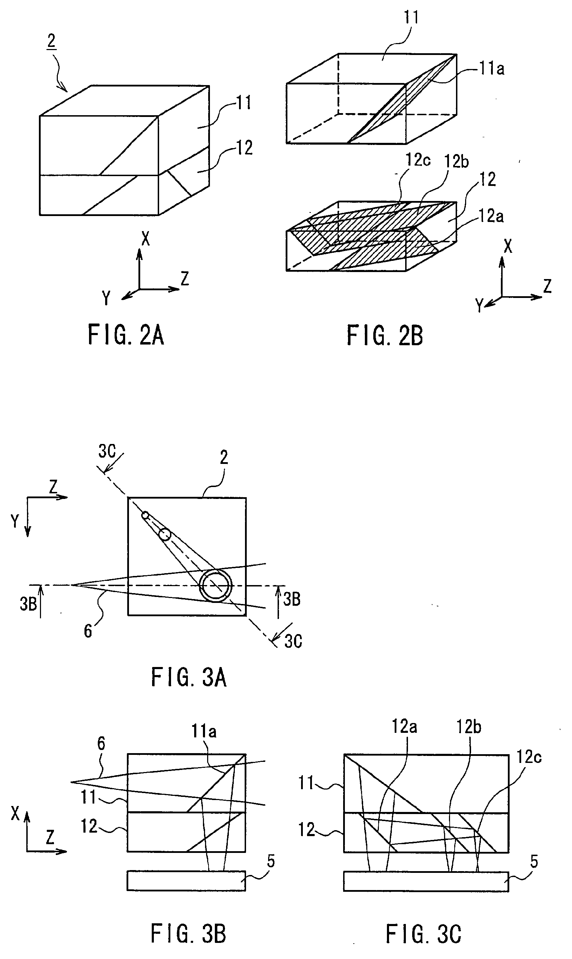

FIGs. 2A and 2B are a perspective view and a perspective exploded view of the beam splitting element 2 according to Embodiment 1 of the present invention. In the figures, reference numerals 11 and 12 denote a first substrate and a second substrate, each formed of the laminate of glass substrates cut so that cutting surfaces are parallel to each other, respectively. The first substrate 11 to the second substrate 12 are joined so as to form the beam splitting element 2. Further, reference numerals 11a and 12a to 12c denote optical surfaces provided in the first substrate 11 and the second substrate 12, respectively. On each of the optical surfaces, an optical film having one optical function is provided.

FIGs. 3A to 3C are explanatory diagrams showing the optical surfaces and optical paths in the beam splitting element 2 according to this embodiment. FIG. 3A shows the optical paths in the beam splitting element 2 as seen from a positive side of an x axis. FIG. 3B is a cross sectional view taken on line 3B - 3B of FIG. 3A. FIG. 3C is a cross sectional view taken on line 3C - 3C of FIG. 3A. In the figures, like reference numerals indicate the corresponding optical surfaces shown in FIGs. 2A and 2B. The optical surface 11a is an inclined surface having a normal vector in a cross section 3B - 3B in FIG. 3A. The optical surfaces 12a to 12c are parallel to each other. Each of the optical surfaces 12a to 12c is an inclined surface having a normal vector in a cross section 3C - 3C in FIG. 3A. The cross section 3B - 3B and the cross section 3C - 3C form an angle of 45 degrees.

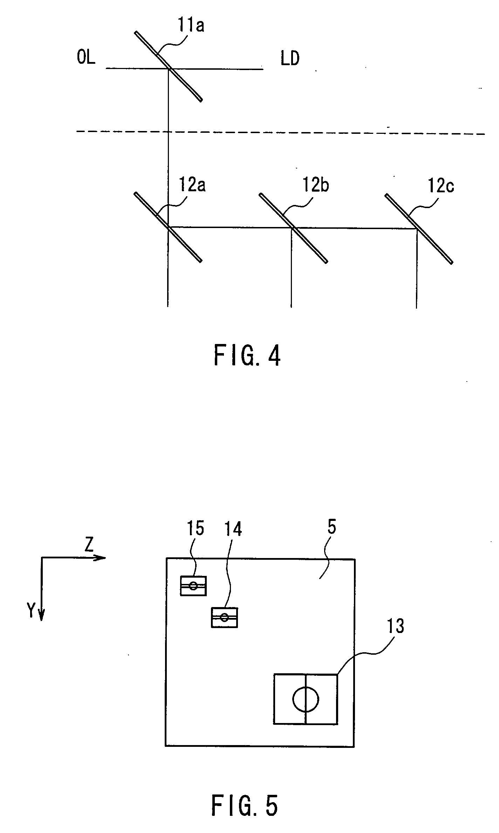

FIG. 4 is a schematic diagram for explaining light splitting in the beam splitting element 2. In the figure, like reference numerals indicate the corresponding optical surfaces shown in FIGs. 2A to 2B and FIGs. 3A to 3C. In FIG. 4, reference characters OL and LD represent an objective lens and a semiconductor laser, respectively. Further, a dotted line in the figure is intended to show different states where a plane of the figure above the dotted line is rotated 45 degrees around an optical axis with respect to a plane of the figure below the dotted line. In FIGs. 2A to FIG. 4, the optical surface 11a transmits 65% of a P-polarized light component while reflecting 35% of the P-polarized light component and reflects substantially 100% of an S-polarized light component. The optical surface 12a is a non-polarization-dependent surface that transmits 40% of a light beam while reflecting 60% of the light beam. The optical surface 12b transmits substantially 100% of a P-polarized light component and reflects substantially 100% of an S-polarized light component. The optical surface 12c reflects substantially 100% of a light beam.

FIG. 5 is a plan view of light-receiving regions and light-receiving spots on the photodetector 5 according to Embodiment 1 of the present invention. In the figure, reference numeral 13 denotes a two-divided light-receiving portion, and reference numerals 14 and 15 denote three-divided light-receiving portions, respectively.

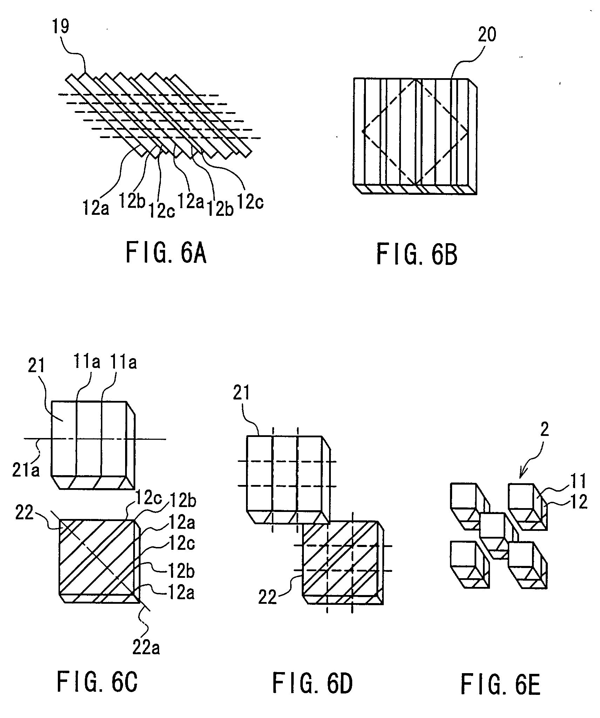

FIGs. 6A to 6E are schematic diagrams for explaining a process of fabricating the beam splitting element 2 according to this embodiment. In the following description, the process steps of fabricating the beam splitting element 2 will be outlined with reference to these figures.

Initially, a member 19 shown in FIG. 6A is fabricated by laminating glass plates. On joint surfaces (second joint surfaces) between the glass plates of the member 19, the optical films to be formed on the optical surfaces 12a to 12c of the second substrate are provided, respectively, one on each surface. In FIG. 6A, reference numerals 12a to 12c indicate a state where the optical films to be formed on the respective optical surfaces of the second substrate are provided on the joint surfaces, respectively.

Next, a substrate 20 shown in FIG. 6B is fabricated by cutting the member 19 along dotted lines in FIG. 6A, namely along surfaces (second cutting surfaces) that cross the joint surfaces of the glass plates on which the optical films 12a to 12c are formed at an angle of 45 degrees so that cutting surfaces are parallel to each other. Further, a second beam splitter substrate 22 shown in FIG. 6C is fabricated by cutting the substrate 20 along dotted lines in FIG. 6B.

Furthermore, a first beam splitter substrate 21 shown in FIG. 6C is fabricated by following the same process steps as those of fabricating the substrate 20. The optical film to be formed on the optical surface 11a of the first substrate 11 is formed on each of joint surfaces (first joint surfaces) in the first beam splitter substrate 21. In FIG. 6C, reference numerals 11a and 12a to 12c also indicate a state where the optical films to be formed on the respective optical surfaces of the first substrate 11 and the second substrate 12 are provided on the joint surfaces, respectively.

Next, the first beam splitter substrate 21 and the second beam splitter substrate 22 are joined to each other. As shown in FIG. 6C, a second straight line 22a is defined as a line that is orthogonal to a straight line at which a main surface (the above-mentioned second cutting surface) of the second beam splitter substrate 22 and each of the joint surfaces on which the optical films 12a to 12c are formed cross each other, and is included in the main surface of the second beam splitter substrate 22. Similarly, a first straight line 21a is defined as a line that is orthogonal to a straight line at which a main surface of the first beam splitter substrate 21 and each of the joint surfaces on which the optical film 11a is formed cross each other, and is included in the main surface of the first beam splitter substrate 21. The main surfaces of the first beam splitter substrate 21 and the second beam splitter substrate 22 are joined so that the first straight line 21a and the second straight line 22a form an angle of 45 degrees.

Then, cutting is performed along dotted lines shown in FIG. 6D. In FIG. 6D, for easier understanding of cutting positions, the first beam splitter substrate 21 and the second beam splitter substrate 22 are shown to be separate, but in fact are joined to each other.

Thus, as shown in FIG. 6E, five pieces of the beam splitting elements 2 can be obtained.

In the following description, an operation of the optical head having the above-mentioned configuration will be explained with reference to FIGs. 1 and 4. The light beam 6 emitted from the semiconductor laser 1 is incident on the beam splitting element 2 to be incident on the optical surface 11a as a P-polarized light beam. The transmitted light beam through the optical surface 11a is emitted from the beam splitting element 2 to be focused on the optical disk 4 by the objective lens 3. The light beam whose polarization direction is rotated slightly by the Kerr effect on the optical disk 4 is reflected therefrom, and then is incident again on the beam splitting element 2 through the objective lens 3. Of the light beam, 35% of a P-polarized light component and an S-polarized light component generated by the Kerr effect are reflected from the optical surface 11a to be incident on the optical surface 12a.

The light beam transmitted through the optical surface 12a is received by the two-divided light-receiving portion 13 on the photodetector 5. Based on a differential signal of two light-receiving signals obtained from the respective light-receiving regions of the two-divided light-receiving portion 13, a tracking error signal can be obtained by a so-called push-pull method.

The reflected light beam from the non-polarization-dependent optical surface 12a is incident on the optical surface 12b while maintaining a state of polarization. The optical surfaces 12a to 12c are parallel to a virtual plane obtained by rotating the optical surface 11a 45 degrees around the x axis. Therefore, a polarized light component in an xz plane that constitutes a major part of a reflected light beam from the optical disk 4 is incident on the optical surface 11a as a P-polarized light beam while being incident on the optical surface 12a as a polarized light beam obtained by rotating the P-polarized light beam or an S-polarized light beam 45 degrees around the optical axis. The light beam incident on the optical surface 12b also is in the same state of polarization. The optical surface 12b has a function of separating a light beam by transmitting a P-polarized light component and by reflecting an S-polarized light component. The light beam incident on the optical surface 12b is separated at a ratio of substantially 1 : 1 by transmission and reflection.

The reflected light beam from the optical surface 12b and the light beam that has been transmitted through the optical surface 12b and reflected from the optical surface 12c are led to the three-divided light-receiving portions 14 and 15 on the photodetector 5, respectively. Based on a result of a differential calculation performed by subtracting a total amount of light-receiving signals received by the three-divided light-receiving portion 15 from a total amount of light-receiving signals received by the three-divided light-receiving portion 14, a magneto-optical signal can be obtained.

Furthermore, the respective positions of the optical surface 12b and the optical surface 12c are set so that with respect to the beam splitting element 2, one of light beams directed towards the light-receiving portions 14 and 15 is focused on a near side of a light-receiving surface, and the other is focused on a far side of the light-receiving surface. This allows spots of substantially the same size to be formed on the three-divided light-receiving portions 14 and 15. Based on signals detected by the light-receiving portions 14 and 15, a focus error signal can be obtained by a known so-called SSD method (Spot Size Detection).

As described above, in the optical head according to the present invention, all beam splitting functions including a function of separating RF signals from magneto-optical signals are integrated in one beam splitting element 2. As shown in FIG. 47, conventionally, such beam splitting functions have been realized by using three elements, namely the polarizing prism, the diffraction grating and the Wollaston polarizing prism. Thus, the number of components can be reduced and regulated, and the process steps of bonding the components can be reduced. In addition, a birefringent material such as lithium niobate is not used for the separation of RF signals, thereby achieving a cost reduction.

Furthermore, a diffraction element is not used on an optical path in which a light beam is emitted from the light source 1 to be transmitted through the beam splitting element 2 to the objective lens 3, and the separation of a light beam is performed by transmission through and reflection from the optical films. Thus, a high light utilization efficiency can be attained, and the problem with the conventional optical head shown in FIG. 47 can be prevented, in which 1st-order diffracted light generated in the diffraction element 187 on an optical path from the light source to the optical disk is mixed into light-receiving signals.

As for the light utilization efficiency, for example, in the conventional optical head shown in FIG. 47, the diffraction element 187 has a transmittance of 70% and diffraction efficiencies of ±1st-order diffracted light of 10% each, and the polarizing prism 188 has a transmittance of 80% and a reflectance of 20%. Therefore, 56% (70% × 80%) of a light amount of the light source 182 is emitted from the polarizing prism 188. On the way back, of a reflected light beam from the optical disk 190 that is incident on the polarizing prism 188, 16% (80% × 10% × 2) is detected as a servo signal, and 20% is detected as an RF signal.

In this embodiment, the ratios of amounts of detected signals for a tracking error signal and an RF signal (detected also as a focus error signal) to an amount of reflected light from the optical disk 4 that is incident on the beam splitting element 2 are 14% (35% × 40%) and 21% (35% × 60%), respectively. These ratios constitute a total of 35% that is equivalent to a total of 36% (16% + 20%) in the conventional case. However, since 65% of a light amount of the light source 1 is emitted from the beam splitting element 2, the light utilization efficiency is 1.16 times higher than a light utilization efficiency of 56% in the conventional case.

Generally, in a diffraction element, light is used by being split into 0th-order light (transmission light) and ±1st-order diffracted light. However, in addition thereto, high-order diffracted light also is generated, thereby causing a reduction of a light amount. In contrast to this, in a prism, light is split by transmission and reflection with a reduced loss of a light amount compared with that in the case of the diffraction element.

That is, in the configuration according to this embodiment, a diffraction element is not used for light splitting, and thus an increased light utilization efficiency can be attained while an amount of detected signals can be maintained at an equivalent level to that in the conventional case.

Furthermore, the beam splitting element 2 according to this embodiment can be fabricated by combining one process to another, in which glass plates on each of which an optical film is formed by vapor deposition are laminated and cut, thereby achieving a cost reduction and also being suitable for mass production.

In this embodiment, the push-pull method is employed as a tracking method. However, the same effect can be attained by, for example, a tracking method disclosed in JP11(1999)-513835 Ain which a calculation is performed on multi-split light beams.

Furthermore, in this embodiment, light splitting was performed on the optical surfaces in the first substrate 11 and the second substrate 12. However, light splitting also can be performed on an optical film provided on a joint surface between the first substrate and the second substrate.

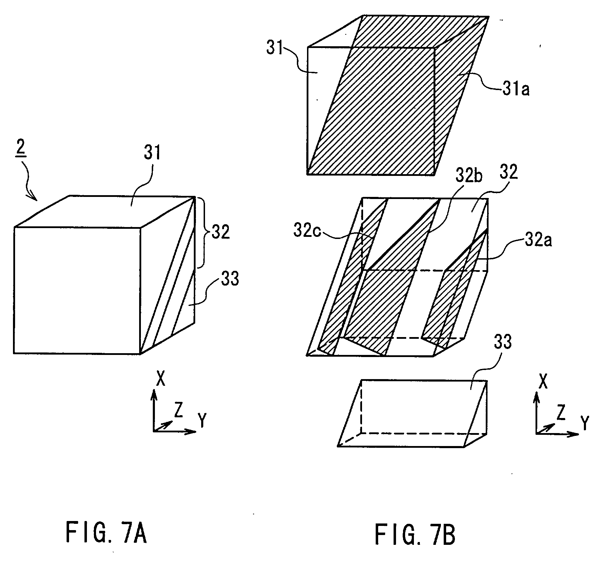

FIGs. 7A and 7B are a perspective view and a perspective exploded view of a beam splitting element 2 according to another form of this embodiment, respectively. In the beam splitting element 2, a joint surface between a first substrate 31 and a second substrate 32 is used as a beam splitting surface, and thus the first substrate 31 is formed of a glass substrate. In the figures, reference numerals 31 and 33 denote glass substrates, and reference numeral 32 denotes a beam splitter substrate fabricated by cutting a laminate of glass substrates so that cutting surfaces are parallel to each other. The beam splitter substrate 32, which is inclined at an angle of 45 degrees with respect to a light incidence surface, and the glass substrates 31 and 33 are joined so that the beam splitter substrate 32 is interposed between the glass substrates 31 and 33, thereby forming the beam splitting element 2. Further, reference numeral 31a denotes an optical surface formed on a joint surface between the glass substrate 31 and the beam splitter substrate 32, and reference numerals 32a to 32c denote optical surfaces formed on the respective joint surfaces between the glass substrates constituting the beam splitter substrate 32. The optical surfaces 31a, 32a, 32b and 32c correspond to the optical surfaces 11a, 12a, 12b and 12c shown in FIG. 2, respectively, and the same optical films as those formed on the optical surfaces 11a, 12a, 12b and 12c are formed on these surfaces, respectively.

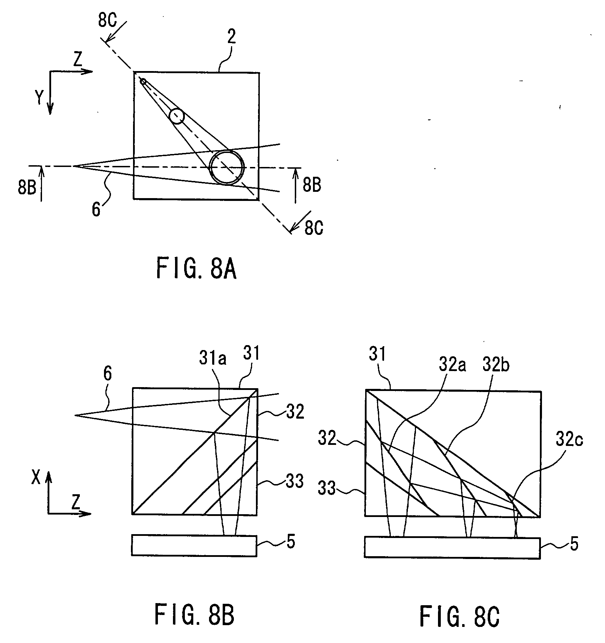

FIGs. 8A to 8C are explanatory diagrams showing the optical surfaces and optical paths in the beam splitting element 2 shown in FIG. 7. FIG. 8A shows the optical paths in the beam splitting element 2 as seen from a positive side of an x axis. FIG. 8B is a cross sectional view taken on line 8B - 8B of FIG. 8A. FIG. 8C is a cross sectional view taken on line 8C - 8C of FIG. 8A. In the figures, like reference numerals indicate the corresponding optical surfaces shown in FIGs. 7A and 7B. The optical surface 31a is an inclined surface having a normal vector in a cross section 8B - 8B in FIG. 8A. The optical surfaces 32a to 32c are parallel to each other. Each of the optical surfaces 32a to 32c is an inclined surface having a normal vector in a cross section 8C - 8C in FIG. 8A. The cross section 8B - 8B and the cross section 8C - 8C form an angle of 45 degrees.

In the following description, a process of fabricating these substrates will be explained briefly. In the process steps shown in FIGs. 6A to 6E, in place of the first beam splitter substrate 21, a glass plate is prepared by forming the optical surface 31a on one face. Then, the glass plate with the optical surface 31a is joined to one face of a beam splitter substrate formed in the same manner as in the case of the second beam splitter substrate 22, and a glass plate is joined to the other face of the beam splitter substrate. Then, a joined body thus obtained is cut so as to form the beam splitting element 2.

In the above-mentioned configuration according to another form of this embodiment, an operation of an optical head is the same as that described with regard to the embodiment shown in FIGs. 1 to 6, and the same effect can be achieved. In addition, this configuration requires only one beam splitter substrate fabricated by cutting a laminate of glass substrates so that cutting surfaces are parallel to each other, and thus a reduction in man-hours of a cutting operation or the like can be attained.

### (Embodiment 2)

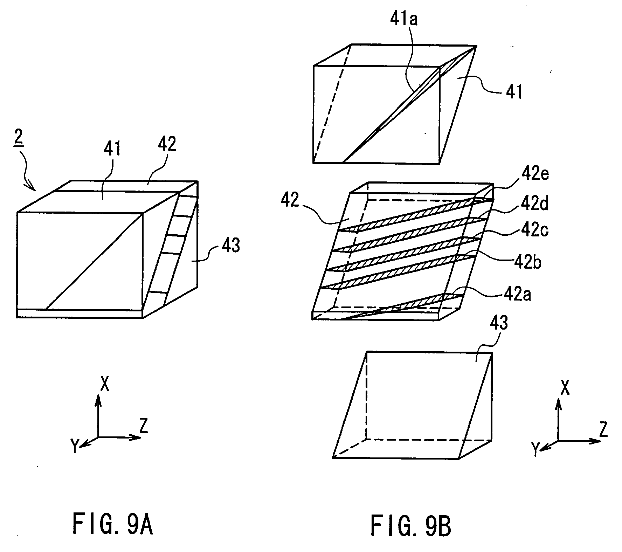

In this embodiment, constituent components other than a beam splitting element 2 and a photodetector 5 have the same configurations as those described with regard to Embodiment 1, for which duplicate descriptions are omitted. FIGs. 9A and 9B are a perspective view and a perspective exploded view of the beam splitting element 2 according to Embodiment 2 of the present invention, respectively. In the figures, reference numerals 41 and 42 denote a first substrate and a second substrate, respectively, each fabricated by cutting a laminate of glass substrates. The first substrate 41, the second substrate 42 and a glass substrate 43 are joined so as to form the beam splitting element 2. Further, reference numerals 41a and 42a to 42e denote optical surfaces provided in the first substrate 41 and the second substrate 42, respectively. On each of the optical surfaces, an optical film having one optical function is provided.

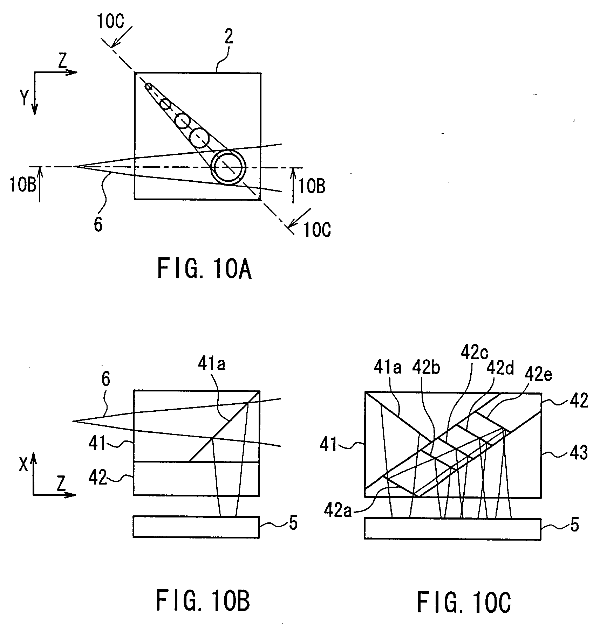

FIGs. 10A to 10C are explanatory diagrams showing the optical surfaces and optical paths in the beam splitting element 2 according to this embodiment. FIG. 10A shows the optical paths in the beam splitting element 2 as seen from a positive side of an x axis. FIG. 10B is a cross sectional view taken on line 10B - 10B of FIG. 10A. FIG. 10C is a cross sectional view taken on line 10C - 10C of FIG. 10A. In the figures, like reference numerals indicate the corresponding optical surfaces shown in FIGs. 9A and 9B. The optical surface 41a is an inclined surface having a normal vector in a cross section 10B - 10B in FIG. 10A. The optical surfaces 42a to 42e are parallel to each other. Each of the optical surfaces 42a to 42e is an inclined surface having a normal vector in a cross section 10C - 10C in FIG. 10A. The cross section 10B - 10B and the cross section 10C - 10C form an angle of 45 degrees.

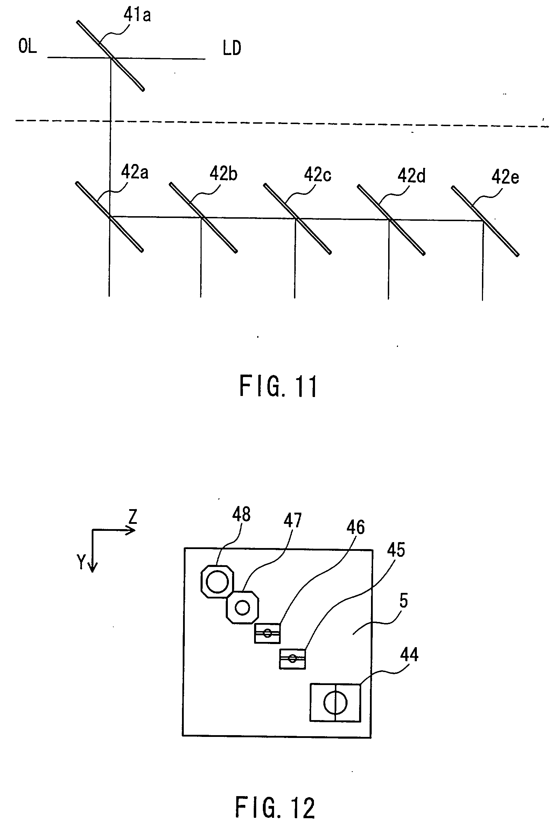

FIG. 11 is a schematic diagram for explaining light splitting in the beam splitting element 2 shown in FIGs. 9A, 9B and FIGs. 10A to 10C. In the figure, like reference numerals indicate the corresponding optical surfaces shown in FIGs. 9A to 10C. Further, a dotted line in the figure is intended to show different states where a plane of the figure above the dotted line is rotated 45 degrees around an optical axis with respect to a plane of the figure below the dotted line. In FIGs. 9A to 11, the optical surface 41a transmits 65% of a P-polarized light component while reflecting 35% of the P-polarized light component and reflects substantially 100% of an S-polarized light component. Each of the optical surfaces 42a to 42c is a non-polarization-dependent surface and transmits one part of a light beam while reflecting another part of the light beam. For example, the optical surfaces 42a, 42b and 42c reflect 80%, 14.2% and 16.6% of a light beam while transmitting the rest of the light beam, respectively. The optical surface 42d transmits substantially 100% of a P-polarized light component and reflects substantially 100% of an S-polarized light component. The optical surface 42e reflects substantially 100% of a light beam.

FIG. 12 is a plan view of light-receiving regions and light-receiving spots on the photodetector 5 according to Embodiment 2 of the present invention. In the figure, reference numeral 44 denotes a two-divided light-receiving portion, and reference numerals 45 and 46 denote three-divided light-receiving portions. Further, reference numerals 47 and 48 denote RF signal light-receiving portions.

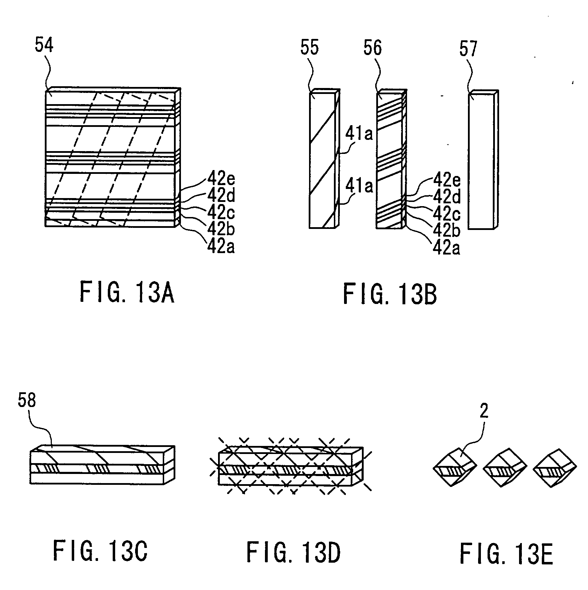

FIGs. 13A to 13E are schematic diagrams for explaining a process of fabricating the beam splitting element 2 according to this embodiment. In the following description, the process steps of fabricating the beam splitting element 2 will be outlined with reference to these figures.

Initially, a beam splitter substrate 54 shown in FIG. 13A is fabricated in the following manner. As in the case of the beam splitter substrate 20 described with regard to Embodiment 1, this beam splitter substrate 54 is fabricated by cutting a laminate of glass plates at a predetermined angle (for example, 45 degrees) with respect to joint surfaces between the glass plates so that cutting surfaces are parallel to each other. On the joint surfaces of the glass plates of the beam splitter substrate 54, the optical films to be formed on the optical surfaces 42a to 42e of the second substrate 42 are provided, respectively, one on each surface. In the figure, reference numerals 42a to 42e indicate a state where the optical films to be formed on the respective optical surfaces of the second substrate 42 are formed on the joint surfaces, respectively.

Next, a substrate 56 shown in FIG. 13B is fabricated by cutting the beam splitter substrate 54 along dotted lines in FIG. 13A. Further, a substrate 55 is fabricated by following the same process steps as those of fabricating the beam splitter substrate 56. The optical film to be formed on the optical surface 41a of the first substrate 41 is formed on each of optical surfaces in the substrate 55. In FIG. 13B, reference numerals 41a and 42a to 42e also indicate a state where the optical films to be formed on the respective optical surfaces of the first substrate 41 and the second substrate 42 are provided on the joint surfaces, respectively.

Next, a composite substrate 58 shown in FIG. 13C is fabricated by joining the substrate 55, the substrate 56 and a glass substrate 57 to each other. In the same manner as that described with regard to FIG. 6C, the optical surface 41a of the substrate 55 and the optical surfaces 42a to 42e of the substrate 56 are set so as to form a predetermined angle. That is, a direction of a straight line that is orthogonal to a straight line at which a main surface of the substrate 55 (surface to be joined to the substrate 56) and the optical surface 41a cross each other, and is included in the main surface of the substrate 55 is defined as a first direction. Similarly, a direction of a straight line that is orthogonal to a straight line at which a main surface of the substrate 56 (surface to be joined to the substrate 55) and each of the optical surfaces 42a to 42e cross each other, and is included in the main surface of the substrate 56 is defined as a second direction. The main surfaces of the substrate 55 and the substrate 56 are joined so that the first direction and the second direction form an angle of 45 degrees.

Finally, cutting is performed along dotted lines shown in FIG. 13D. Thus, three pieces of the beam splitting elements 2 shown in FIG. 13E can be obtained.

In the following description, an operation of an optical head having the above-mentioned configuration will be explained with reference to FIGs. 1 and 11. The light beam 6 emitted from the semiconductor laser 1 is incident on the beam splitting element 2 to be incident on the optical surface 41a as a P-polarized light beam. The transmitted light beam through the optical surface 41a is emitted from the beam splitting element 2 to be focused on the optical disk 4 by the objective lens 3. The light beam whose polarization direction is rotated slightly by the Kerr effect on the optical disk 4 is reflected therefrom, and then is incident again on the beam splitting element 2 through the objective lens 3. Of the light beam, 35% of a P-polarized light component and an S-polarized light component generated by the Kerr effect are reflected from the optical surface 41a to be incident on the optical surface 42a.

The transmitted light beam through the optical surface 42a is received by the two-divided light-receiving portion 44 on the photodetector 5. Based on light-receiving signals thus obtained, a tracking error signal can be obtained by the so-called push-pull method.

The reflected light beam from the optical surface 42a is incident on the optical surface 42b, and the transmitted light beam through the optical surface 42b is be incident on the optical surface 42c. One part each of the respective light beams that have been incident on the optical surfaces 42b and 42c are reflected therefrom to be led to the three-divided light-receiving portions 45 and 46 on the photodetector 5, respectively, and thus a focus error signal can be obtained by the so-called SSD method.

The light beam that has been reflected from the non-polarization-dependent optical surface 42a and transmitted through the optical surfaces 42b and 42c is incident on the optical surface 42d while maintaining a state of polarization. The optical surfaces 42a to 42e are parallel to a virtual plane obtained by rotating the optical surface 41a 45 degrees around the optical axis. Therefore, a polarized light component in an xz plane that constitutes a major part of a reflected light beam from the optical disk 4 is incident on the optical surface 41a as a P-polarized light beam while being incident on the optical surface 42a as a polarized light beam obtained by rotating the P-polarized light beam or an S-polarized light beam 45 degrees around the optical axis. The light beam incident on the optical surface 42d also is in the same state of polarization. The optical surface 42d has a function of separating a light beam by transmitting a P-polarized light component and by reflecting an S-polarized light component. The light beam incident on the optical surface 42d is separated at a ratio of substantially 1 : 1 by transmission and reflection.

The reflected light beam from the optical surface 42d and the light beam that has been transmitted through the optical surface 42d and reflected from the optical surface 42e are led to the light-receiving portions 47 and 48 on the photodetector 5, respectively. By performing a differential calculation on the light-receiving signals obtained by the light-receiving portions 47 and 48, a magneto-optical signal can be obtained.

The above-mentioned configuration according to this embodiment can provide, in addition to the effect of Embodiment 1, an effect of reducing amplifier noise of an RF signal, thereby allowing an improved signal quality to be obtained. The following description is directed to how this can be achieved.

In Embodiment 1, the detection of an RF signal and the detection of a focus error signal were performed using the common light-receiving spots. Therefore, obtaining an RF signal required that a calculation be performed on signals received by the three-divided light-receiving portions 14 and 15 . However, when a signal is obtained by calculations performed on a plurality of signals, amplifier noise is increased with increasing number of the calculations performed. In this embodiment, since an RF signal and a focus error signal are detected in separate regions, the light-receiving portions 47 and 48 are not divided. Thus, this embodiment allows further reduction in amplifier noise.

Furthermore, a light beam is reflected from the optical surface 42a in a non-parallel direction to a light-receiving surface on the photodetector 5. Thus, the beam splitting element can be prevented from being expanded in size in a y direction because of an increased number of optical surfaces.

As with the foregoing embodiment, in this embodiment, a diffraction element is not used for light splitting. Thus, when the amount of detected signals is the same as that in the conventional case, a higher light utilization efficiency than that in the conventional case can be attained.

According to the above-mentioned configuration, in this embodiment, where an amount of reflected light from the optical disk 4 that is incident on the beam splitting element 2 is 100%, the amounts of detected signals for a tracking error signal, a focus error signal and an RF signal are 7%, 8% and 20%, respectively. These amounts are equivalent to the respective amounts for a servo signal and an RF signal of 16% and 20% in the conventional case. However, as in Embodiment 1, the light utilization efficiency is 1.16 times higher than that in the conventional case.

### (Embodiment 3)

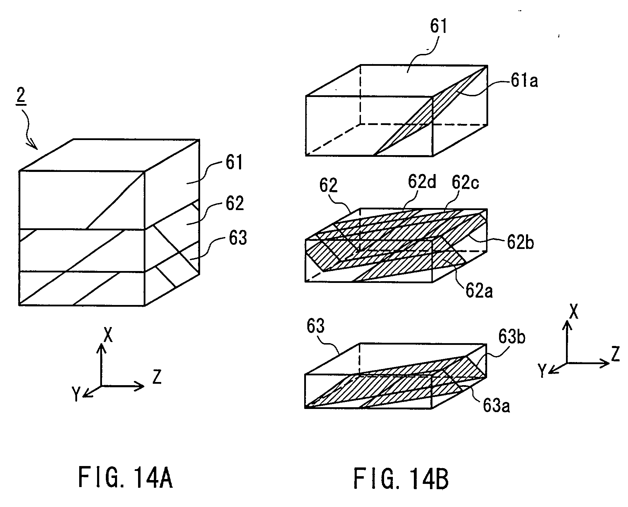

In this embodiment, constituent components other than a beam splitting element 2 and a photodetector 5 have the same configurations as those described with regard to Embodiments 1 and 2, for which duplicate descriptions are omitted. FIGs. 14A and 14B are a perspective view and a perspective exploded view of the beam splitting element 2 according to Embodiment 3 of the present invention, respectively. In the figures, reference numerals 61, 62 and 63 denote a first substrate, a second substrate and a third substrate, respectively, each fabricated by cutting a laminate of glass substrates so that cutting surfaces are parallel to each other. The first substrate 61, the second substrate 62 and the third substrate 63 are joined so as to form the beam splitting element 2. Further, reference numerals 61a, 62a to 62d, 63a and 63b are optical surfaces provided in the first substrate 61, the second substrate 62 and the third substrate 63, respectively. On each of the optical surfaces, an optical film having one optical function is provided.

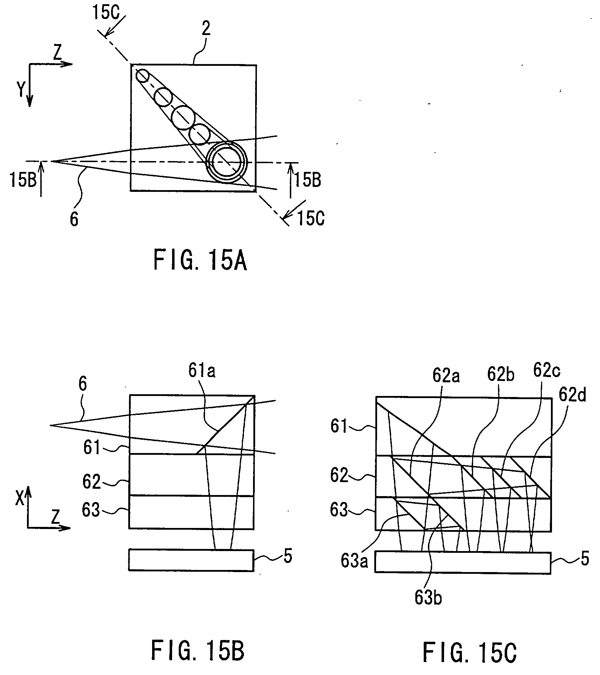

FIGs 15A to 15C are explanatory diagrams showing the optical surfaces and optical paths in the beam splitting element 2 according to this embodiment. FIG. 15A shows the optical paths in the beam splitting element 2 as seen from a positive side of an x axis. FIG. 15B is a cross sectional view taken on line 15B - 15B of FIG. 15A. FIG. 15C is a cross sectional view taken on line 15C - 15C of FIG. 15A. In the figures, like reference numerals indicate the corresponding optical surfaces shown in FIGs. 14A and 14B. The optical surface 61a is an inclined surface having a normal vector in a cross section 15B - 15B in FIG. 15A. The optical surfaces 62a to 62d, 63a and 63b are parallel to each other. Each of the optical surfaces 62a to 62d, 63a and 63b is an inclined surface having a normal vector in a cross section 15C - 15C in FIG. 15A. The cross section 15B - 15B and the cross section 15C - 15C form an angle of 45 degrees.

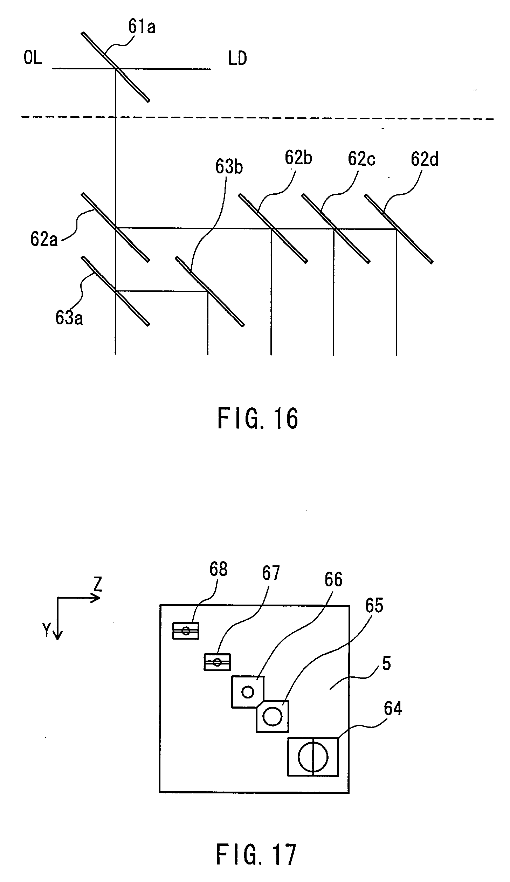

FIG. 16 is a schematic diagram for explaining light splitting in the beam splitting element 2 shown in FIGs. 14A and 14B and FIGs. 15A to 15C. In the figure, like reference numerals indicate the corresponding optical surfaces shown in FIGs. 14A and 14B and FIGs. 15A to 15C. Further, a dotted line in the figure is intended to show different states where a plane of the figure above the dotted line is rotated 45 degrees around an optical axis with respect to a plane of the figure below the dotted line. In FIGs. 14A to 16, the optical surface 61a transmits 70% of a P-polarized light component while reflecting 30% of the P-polarized light component and reflects substantially 100% of an S-polarized light component. The optical surface 62a transmits substantially 100% of a P-polarized light component and reflects substantially 100% of an S-polarized light component. Each of the optical surfaces 62b, 62c and 63a is a non-polarization-dependent surface and transmits 50% of a light beam while reflecting 50% of the light beam. Each of the optical surfaces 62d and 63b reflects substantially 100% of a light beam.

FIG. 17 a plan view of light-receiving regions and light-receiving spots on the photodetector 5 according to Embodiment 3 of the present invention. In the figure, reference numeral 64 denotes a two-divided light-receiving portion, and reference numerals 65 and 66 denote RF signal light-receiving portions. Further, reference numerals 67 and 68 denote three-divided light-receiving portions.

The beam splitting element 2 according to this embodiment can be fabricated in the following manner. As in the method described with regard to Embodiment 1, a member formed of a laminate of glass plates, in which an optical film having an optical function is provided on each of joint surfaces between the glass plates, is cut at a predetermined angle (for example, 45 degrees) with respect to the joint surfaces so that cutting surfaces are parallel to each other. Three pieces of beam splitter substrates thus obtained are joined, and a joined body thus obtained is cut so as to form the beam splitting element 2. In this embodiment, in the process steps described on Embodiment 1 with reference to FIGs. 6A to 6E, on the second beam splitter substrate 22 on a side opposite the first beam splitter substrate 21, a third beam splitter substrate, obtained by the same method as that of fabricating the substrates 21 and 22, is laminated.

In the following description, an operation of an optical head having the above-mentioned configuration will be explained with reference to FIGs. 1 and 16. The light beam 6 emitted from the semiconductor laser 1 is incident on the beam splitting element 2 to be incident on the optical surface 61a as a P-polarized light beam. The transmitted light beam through the optical surface 61a is emitted from the beam splitting element 2 to be focused on the optical disk 4 by the objective lens 3. The light beam whose polarization direction is rotated slightly by the Kerr effect on the optical disk 4 is reflected therefrom, and then is incident again on the beam splitting element 2 through the objective lens 3. Of the light beam, 30% of a P-polarized light component and an S-polarized light component generated by the Kerr effect are reflected from the optical surface 61a to be incident on the optical surface 62a.

The optical surfaces 62a to 62d are parallel to a virtual plane obtained by rotating the optical surface 61a 45 degrees around the optical axis. Therefore, a polarized light component in an xz plane that constitutes a major part of a reflected light beam from the optical disk 4 is incident on the optical surface 61a as a P-polarized light beam while being incident on the optical surface 62a as a polarized light beam obtained by rotating the P-polarized light beam or an S-polarized light beam 45 degrees around the optical axis. The optical surface 62a has a function of separating a light beam by transmitting a P-polarized light component and by reflecting an S-polarized light component. The light beam incident on the optical surface 62a is separated at a ratio of substantially 1 : 1 by transmission and reflection.

The transmitted light beam through the optical surface 62a is incident on the optical surface 63a, and the transmitted light beam through the optical surface 63a is received by the two-divided light-receiving portion 64 on the photodetector 5. Based on light-receiving signals thus obtained, a tracking error signal can be obtained by the so-called push-pull method. The S-polarized light beam that has been reflected from the optical surface 62a is split on the optical surface 62b. The transmitted light beam through the optical surface 62b is split on the optical surface 62c. The transmitted light beam through the optical surface 62c reaches the optical surface 62d. The reflected light beams from the optical surfaces 62c and 62d are led to the three-divided light-receiving portions 67 and 68 on the photodetector 5, respectively, and thus a focus error signal can be obtained by the so-called SSD method.

The reflected light beam from the optical surface 62b and the light beam that has been reflected from the optical surface 63a and reflected from the optical surface 63b are led to the light-receiving portions 65 and 66 on the photodetector 5, respectively. By performing a differential calculation on light-receiving signals obtained by the light-receiving portions 65 and 66, a magneto-optical signal can be obtained.

The above-mentioned configuration according to this embodiment can provide, in addition to the effect of Embodiment 2, an effect of preventing reduction of a carrier level of an RF signal, thereby achieving an excellent signal quality. The following description is directed to how this can be achieved.

In Embodiment 2, a light beam that has been incident on the second substrate is transmitted through or reflected from three optical surfaces on the way to the optical surface for separating light into polarized light components for the detection of an RF signal. On each of these three optical surfaces, the optical film that separates a light beam by transmission and reflection is provided. In the transmission and the reflection, a slight phase difference is caused between a P-polarized light component and an S-polarized light component. The P-polarization and S-polarization directions of these optical surfaces are at ±45 degrees with respect to a main polarized light component of a reflected light beam from an optical disk. Therefore, when this phase difference is increased, the degree of linear polarization of reflected light from the optical disk is lowered. Thus, when a light beam passes through these optical surfaces plural times, a phase difference is accumulated. This impairs the degree of linear polarization of signal light, so that a carrier level is lowered. In this embodiment, a light beam is separated into polarized light components for the detection of an RF signal on the optical surface 62a on which a light beam incident on the second substrate enters first. Thus, the degree of linear polarization of signal light is not lowered as a result of the accumulation of a phase difference caused by the optical surfaces, thereby preventing an RF signal from being degraded in quality.

### (Embodiment 4)

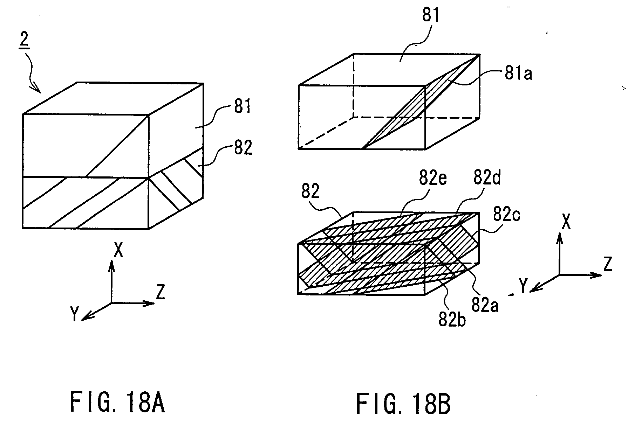

In this embodiment, constituent components other than a beam splitting element 2 and a photodetector 5 have the same configurations as those described with reference to Embodiments 1 to 3, for which duplicate descriptions are omitted. FIGs. 18A and 18B are a perspective view and a perspective exploded view of the beam splitting element 2 according to Embodiment 4 of the present invention, respectively. In the figures, reference numerals 81 and 82 denote a first substrate and a second substrate, respectively, each fabricated by cutting a laminate of glass substrates so that cutting surfaces are parallel to each other. The first substrate 81 and the second substrate 82 are joined so as to form the beam splitting element 2. Further, reference numerals 81a and 82a to 82e denote optical surfaces provided in the first substrate 81 and the second substrate 82, respectively. On each of the optical surfaces, an optical film having one optical function is provided.

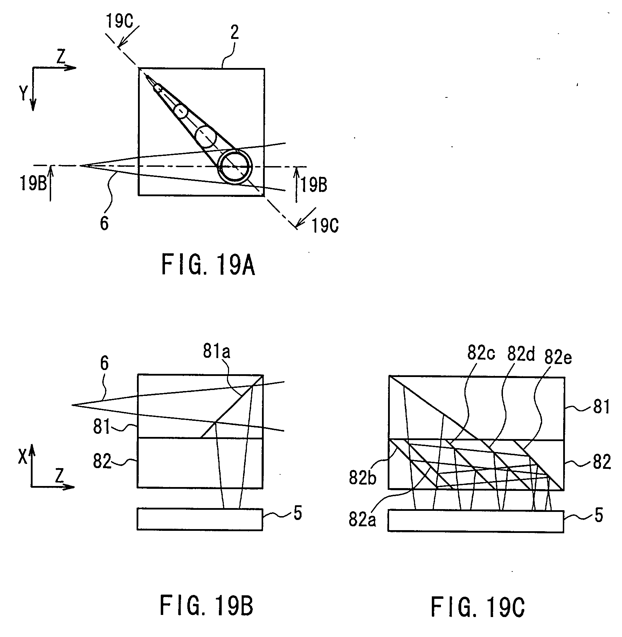

FIGs. 19A to 19C are explanatory diagrams showing the optical surfaces and optical paths in the beam splitting element 2 according to this embodiment. FIG. 19A shows the optical paths in the beam splitting element 2 as seen from a positive side of an x axis. FIG. 19B is a cross sectional view taken on line 19B - 19B of FIG. 19A. FIG. 19C is a cross sectional view taken on line 19C - 19C of FIG. 19A. In the figures, like reference numerals indicate the corresponding optical surfaces shown in FIGs. 18A and 18B. The optical surface 81a is an inclined surface having a normal vector in a cross section 19B - 19B in FIG. 19A. The optical surfaces 82a to 82e are parallel to each other. Each of the optical surfaces 82a to 82e is an inclined surface having a normal vector in a cross section 19C - 19C in FIG. 19A. The cross section 19B - 19B and the cross section 19C - 19C form an angle of 45 degrees.

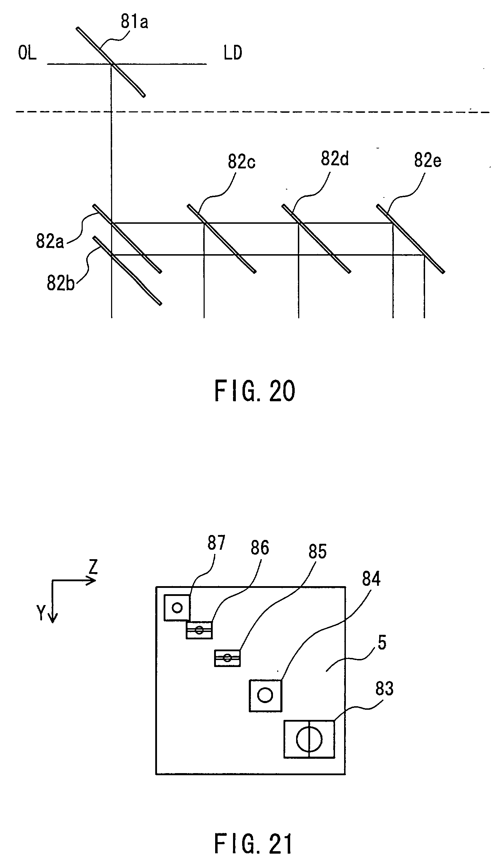

FIG. 20 is a schematic diagram for explaining light splitting in the beam splitting element 2 shown in FIGs. 18A, 18B and FIGs. 19A to 19C. In the figure, like reference numerals indicate the corresponding optical surfaces shown in FIGs. 18A, 18B and FIGs. 19A to 19C. Further, a dotted line in the figure is intended to show different states where a plane of the figure above the dotted line is rotated 45 degrees around an optical axis with respect to a plane of the figure below the dotted line. In FIGs. 18A to 20, the optical surface 81a transmits 70% of a P-polarized light component while reflecting 30% of the P-polarized light component and reflects substantially 100% of an S-polarized light component. The optical surface 82a transmits substantially 100% of a P-polarized light component and reflects substantially 100% of an S-polarized light component. The optical surface 82b is a non-polarization-dependent surface and transmits 50% of a light beam while reflecting 50% of the light beam. The optical surfaces 82c and 82d transmit substantially 100% of a P-polarized light component and 50% of an S-polarized light component while reflecting 50% of the S-polarized light component. The optical surface 82e reflects substantially 100% of a light beam.

FIG. 21 is a plan view of light-receiving regions and light-receiving spots on the photodetector 5 according to Embodiment 4 of the present invention. In the figure, reference numeral 83 denotes a two-divided light-receiving portion. Further, reference numerals 84 and 87 denote RF signal light-receiving portions, and reference numerals 85 and 86 denote three-divided light-receiving portions.

The beam splitting element 2 according to this embodiment is fabricated in the following manner. As in the method described with regard to Embodiment 1 (refer to FIGs. 6A to 6E), a member formed of a laminate of glass plates, in which an optical film having an optical function is provided on each of joint surfaces between the glass plates, is cut at a predetermined angle (for example, 45 degrees) with respect to the joint surfaces so that cutting surfaces are parallel to each other. Two pieces of beam splitter substrates thus obtained are joined, and a joined body thus obtained is cut so as to form the beam splitting element 2.

In the following description, an operation of an optical head having the above-mentioned configuration will be explained with reference to FIGs. 1 and 20. The light beam 6 emitted from the semiconductor laser 1 is incident on the beam splitting element 2 to be incident on the optical surface 81a as a P-polarized light beam. The transmitted light beam through the optical surface 81a is emitted from the beam splitting element 2 to be focused on the optical disk 4 by the objective lens 3. The light beam whose polarization direction is rotated slightly by the Kerr effect on the optical disk 4 is reflected therefrom, and then is incident again on the beam splitting element 2 through the objective lens 3. Of the light beam, 30% of a P-polarized light component and an S-polarized light component generated by the Kerr effect are reflected from the optical surface 81a to be incident on the optical surface 82a.

The optical surfaces 82a to 82e are parallel to a virtual plane obtained by rotating the optical surface 81a 45 degrees around the optical axis. Therefore, a polarized light component in an xz plane that constitutes a major part of a reflected light beam from the optical disk 4 is incident on the optical surface 81a as a P-polarized light beam while being incident on the optical surface 82a as a polarized light beam obtained by rotating the P-polarized light beam or an S-polarized light beam 45 degrees around the optical axis. The optical surface 82a has a function of separating a light beam by transmitting a P-polarized light component and by reflecting an S-polarized light component. The light beam incident on the optical surface 82a is separated at a ratio of substantially 1 : 1 by transmission and reflection.

The transmitted light beam through the optical surface 82a is incident on the optical surface 82b, and the transmitted light beam through the optical surface 82b is received by the two-divided light-receiving portion 83 on the photodetector 5. Based on light-receiving signals thus obtained, a tracking error signal can be obtained by the so-called push-pull method.

The S-polarized light beam that has been reflected from the optical surface 82a and the P-polarized light beam that has been reflected from the optical surface 82b are incident on the optical surface 82c. The respective transmitted light beams through the optical surface 82c are incident on the optical surface 82d. On each of the optical surfaces 82c and 82d, an optical film that transmits substantially 100% of P-polarized light and 50% of S-polarized light while reflecting 50% of the S-polarized light is provided. Therefore, only the reflected light beam from the optical surface 82a is reflected from the optical surfaces 82c and 82d. The reflected light beams from the optical surfaces 82c and 82d are led to the RF signal light-receiving portion 84 and the three-divided light-receiving portion 85 on the photodetector 5, respectively. The light beam that has been reflected from the optical surface 82a and transmitted through the optical surfaces 82c and 82d and the light beam that has been reflected from the optical surface 82b and transmitted through the optical surfaces 82c and 82d are reflected from the optical surface 82e and led to the three-divided light-receiving portion 86 and the RF signal light-receiving portion 87, respectively.

Based on the light beams led to the three-divided light-receiving portions 85 and 86 on the photodetector 5, a focus error signal can be obtained by the so-called SSD method, and based on the light beams led to the RF signal light-receiving portions 84 and 87, a magneto-optical signal can be obtained.

As described above, in the configuration according to this embodiment, two of the beam splitter substrates are joined to each other. Thus, in addition to the effect of Embodiment 3, an effect of reducing man-hours and an amount of materials required for the fabrication of a beam splitting element can be attained, thereby achieving further cost reduction.

### (Embodiment 5)

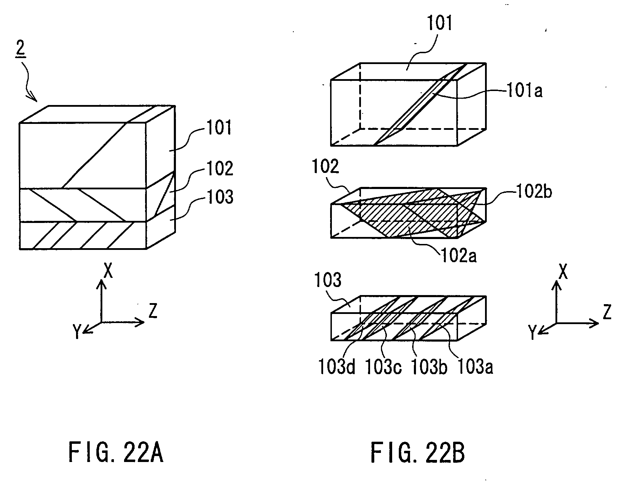

In this embodiment, constituent components other than a beam splitting element 2 and a photodetector 5 have the same configurations as those described with regard to Embodiments 1 to 4, for which duplicate descriptions are omitted. FIGs. 22A and 22B are a perspective view and a perspective exploded view of the beam splitting element 2 according to Embodiment 5 of the present invention, respectively. In the figures, reference numerals 101, 102 and 103 denote a first substrate, a second substrate and a third substrate, respectively, each fabricated by cutting a laminate of glass substrates so that cutting surfaces are parallel to each other. The first substrate 101, the second substrate 102 and the third substrate 103 are joined so as to form the beam splitting element 2. Further, reference numerals 101a, 102a, 102b and 103a to 103d denote optical surfaces provided in the first substrate 101, the second substrate 102 and the third substrate 103, respectively. On each of the optical surfaces, an optical film having one optical function is provided.

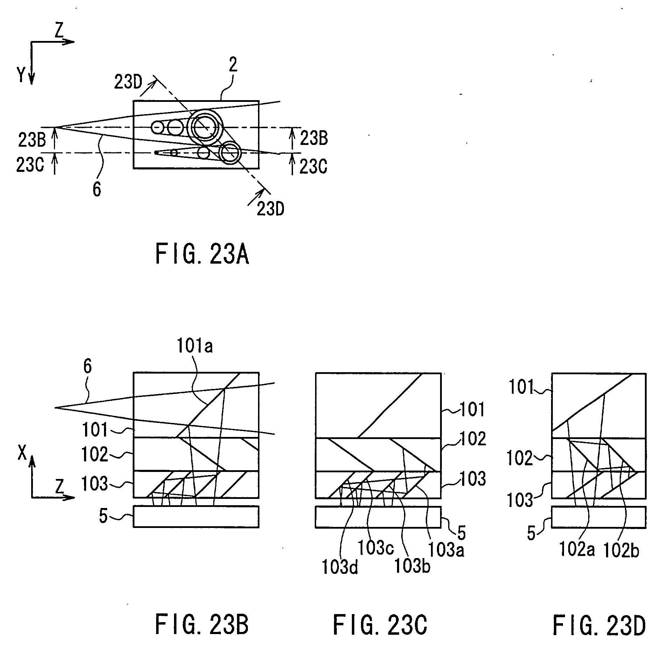

FIGs. 23A to 23D are explanatory diagrams showing the optical surfaces and optical paths in the beam splitting element 2 according to this embodiment. FIG. 23A shows the optical paths in the beam splitting element 2 as seen from a positive side of an x axis. FIG. 23B is a cross sectional view taken on line 23B - 23B of FIG. 23A. FIG. 23C is a cross sectional view taken on line 23C - 23C of FIG. 23A. FIG. 23D is a cross sectional view taken on line 23D - 23D of FIG. 23A. In the figures, like reference numerals indicate the corresponding optical surfaces shown in FIGs. 22A and 22B.

Each of the optical surfaces 101a and 103a to 103d is an inclined surface having a normal vector in a cross section 23B - 23B of FIG. 23A. The optical surfaces 102a and 102b are parallel to each other. Each of the optical surfaces 102a and 102b is an inclined surface having a normal vector in a cross section 23D - 23D of FIG. 23A. The cross section 23B - 23B and a cross section 23C - 23C are parallel to each other. The cross section 23B - 23B and the cross section 23D - 23D form an angle of 45 degrees.

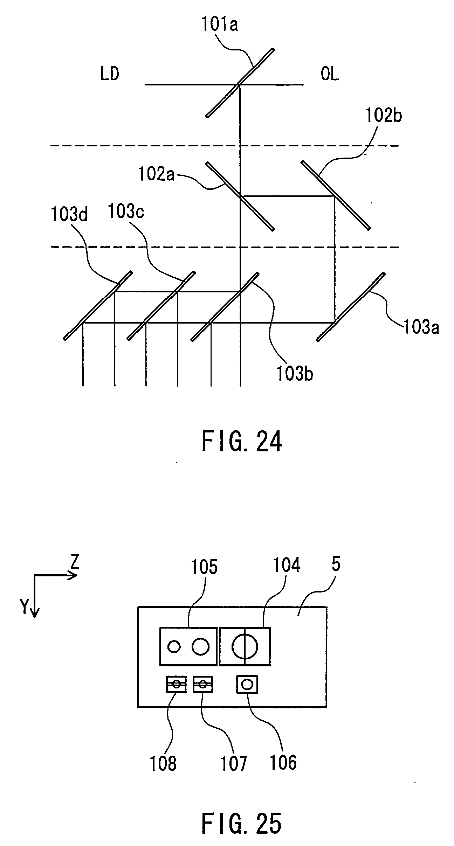

FIG. 24 is a schematic diagram for explaining light splitting in the beam splitting element 2 shown in FIGs. 22A, 22B and FIGs. 23A to 23D. In the figure, like reference numerals indicate the corresponding optical surfaces shown in FIGs. 22A, 22B and FIGs. 23A to 23D. Further, a dotted line in the figure is intended to show different states where a plane of the figure above the dotted line is rotated 45 degrees around an optical axis with respect to a plane of the figure below the dotted line. In FIGs. 22A to 24, the optical surface 101a transmits 70% of a P-polarized light component while reflecting 30% of the P-polarized light component and reflects substantially 100% of an S-polarized light component. The optical surface 102a transmits substantially 100% of a P-polarized light component and reflects substantially 100% of an S-polarized light component. Each of the optical surfaces 103b and 103c is a non-polarization-dependent surface and transmits 50% of a light beam while reflecting 50% of the light beam. Each of the optical surfaces 102b, 103a and 103d reflects substantially 100% of a light beam.

FIG. 25 is a plan view of light-receiving regions and light-receiving spots on the photodetector 5 according to Embodiment 5 of the present invention. In the figure, reference numeral 104 denotes a two-divided light-receiving portion, and reference numerals 105 and 106 denote RF signal light-receiving portions. Further, reference numerals 107 and 108 denote three-divided light-receiving portions.

The beam splitting element 2 according to this embodiment can be fabricated in the following manner. As in the method described with regard to Embodiment 1, a member formed of a laminate of glass plates, in which an optical film having an optical function is provided on each of joint surfaces between the glass plates, is cut at a predetermined angle (for example, 45 degrees) with respect to the joint surfaces so that cutting surfaces are parallel to each other. Three pieces of beam splitter substrates thus obtained are joined, and a joined body thus obtained is cut so as to form the beam splitting element 2. In this embodiment, in the same manner as in Embodiment 3, in the process steps described on Embodiment 1 with reference to FIGs. 6A to 6E, on the second beam splitter substrate 22 on a side opposite the first beam splitter substrate 21, a third beam splitter substrate obtained by the same method as that of fabricating the substrates 21 and 22 is laminated. In this case, however, the second beam splitter substrate 22 and the third beam splitter substrate are joined to each other in their respective directions different from those in Embodiment 3. That is, a direction that is orthogonal to a straight line at which a joint surface of the second beam splitter substrate 22 to be joined to the third beam splitter substrate and the optical surface 102a in the second beam splitter substrate 22 cross each other, and is parallel to the joint surface of the second beam splitter substrate 22 is defined as a second direction of the second beam splitter substrate 22. Further, a direction that is orthogonal to a straight line at which a joint surface of the third beam splitter substrate to be joined to the second beam splitter substrate 22 and the optical surface 103a in the third beam splitter substrate cross each other, and is parallel to the joint surface of the third beam splitter substrate is defined as a third direction of the third beam splitter substrate. In Embodiment 3, the second beam splitter substrate 22 and the third beam splitter substrate are joined so that the second direction and the third direction are substantially parallel to each other. In contrast to this, in this embodiment, the second beam splitter substrate 22 and the third beam splitter substrate are joined so that the second direction and the third direction form an angle of substantially 45 degrees.

In the following description, an operation of an optical head having the above-mentioned configuration will be explained with reference to FIGs. 1 and 24. The light beam 6 emitted from the semiconductor laser 1 is incident on the beam splitting element 2 to be incident on the optical surface 101a as a P-polarized light beam. The transmitted light beam through the optical surface 101a is emitted from the beam splitting element 2 to be focused on the optical disk 4 by the objective lens 3. The light beam whose polarization direction is rotated slightly by the Kerr effect on the optical disk 4 is reflected therefrom, and then is incident again on the beam splitting element 2 through the objective lens 3. Of the light beam, 30% of a P-polarized light component and an S-polarized light component generated by the Kerr effect are reflected from the optical surface 101a to be incident on the optical surface 102a.

The optical surfaces 102a and 102b are parallel to a virtual plane obtained by rotating the optical surface 101a 45 degrees around the optical axis. Therefore, a polarized light component in an xz plane that constitutes a major part of a reflected light beam from the optical disk 4 is incident on the optical surface 101a as a P-polarized light component while being incident on the optical surface 102a as a polarized light beam obtained by rotating the P-polarized light beam or an S-polarized light beam 45 degrees around the optical axis. The optical surface 102a has a function of separating a light beam by transmitting a P-polarized light component and by reflecting an S-polarized light component. The light beam incident on the optical surface 102a is separated at a ratio of substantially 1 : 1 by transmission and reflection.

The P-polarized light beam that has been transmitted through the optical surface 102a is incident on the optical surface 103b, and the transmitted light beam through the optical surface 103b is received by the two-divided light-receiving portion 104 on the photodetector 5. Based on light-receiving signals thus obtained, a tracking error signal can be obtained by the so-called push-pull method. The P-polarized light beam that has been reflected from the optical surfaces 103b is reflected from the optical surfaces 103c and 103d. Both of the reflected light beams from the optical surfaces 103c and 103d are led to the light-receiving portion 105 on the photodetector 5.

The S-polarized light beam that has been reflected from the optical surfaces 102a is reflected from the optical surface 102b and then reflected from the optical surface 103a. Of the light beam, 50% is reflected from the optical surface 103b to be led to the RF signal light-receiving portion 106. Of the S-polarized light beam that has been transmitted through the optical surface 103b, one part is reflected from the optical surface 103c, and the rest is reflected from the optical surface 103d. The reflected light beams from the optical surfaces 103c and 103d are led to the three-divided light-receiving portions 107 and 108 on the photodetector 5, respectively, and thus a focus error signal can be obtained by the so-called SSD method. By performing a differential calculation on signals obtained by receiving the P-polarized light beams incident on the RF signal light-receiving portion 105 and the S-polarized light beam incident on the RF signal light-receiving portion 106, a magneto-optical signal can be obtained.

In the above-mentioned configuration according to this embodiment, compared with other embodiments, a beam splitting element can be reduced more in size in a y-axis direction, and thus an increased number of substrates can be obtained from the same amount of materials, thereby contributing to a cost reduction of a whole element. Further, a configuration in which a y-axis direction of a prism is set so as to coincide with a thickness direction of an optical head also contributes to a reduction in thickness of the optical head.

### (Embodiment 6)

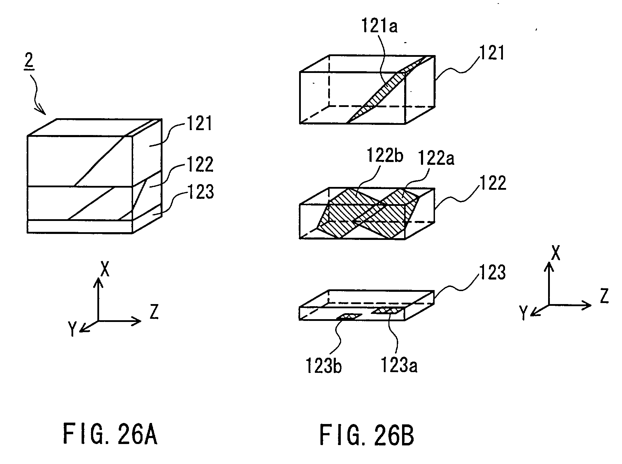

In this embodiment, constituent components other than a beam splitting element 2 and a photodetector 5 have the same configurations as those described with regard to Embodiments 1 to 5, for which duplicate descriptions are omitted. FIGs. 26A and 26B are a perspective view and a perspective exploded view of the beam splitting element 2 according to Embodiment 6 of the present invention, respectively. In the figures, reference numerals 121 and 122 denote a first substrate and a second substrate, respectively, each fabricated by cutting a laminate of glass substrates so that cutting surfaces are parallel to each other. Further, reference numeral 123 denotes a third substrate formed of a glass substrate with diffraction gratings provided on one face. The first substrate 121, the second substrate 122 and the third substrate 123 are joined so as to form the beam splitting element 2. Furthermore, reference numerals 121a, 122a and 122b denote optical surfaces provided in the first substrate 121 and the second substrate 122, respectively. On each of the optical surfaces, an optical film having one optical function is provided. Further, reference numerals 123a and 123b denote diffraction gratings provided on the third substrate 123 on a surface opposite a joint surface. The diffraction gratings 123a and 123b are disposed on optical paths of a transmitted light beam through the optical surface 122a and a reflected light beam from the optical surface 122b, respectively.

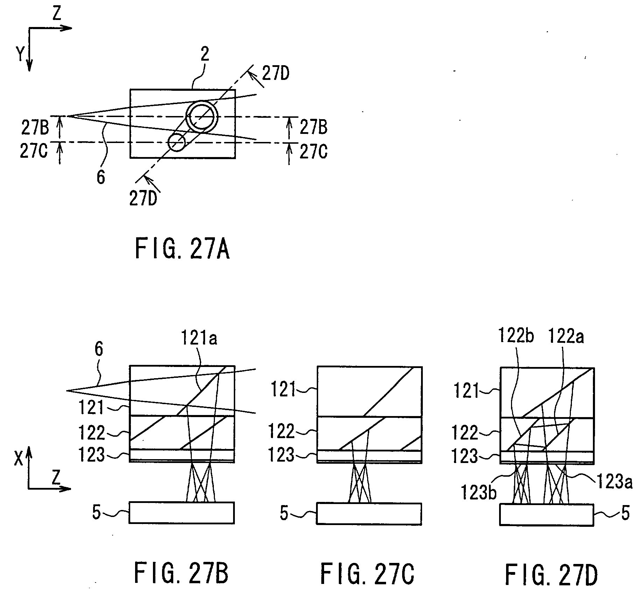

FIGs. 27A to 27D are explanatory diagrams showing the optical surfaces and optical paths in the beam splitting element 2 according to this embodiment. FIG. 27A shows the optical paths in the beam splitting element 2 as seen from a positive side of an x axis. FIG. 27B is a cross sectional view taken on line 27B - 27B of FIG. 27A. FIG. 27C is a cross sectional view taken on line 27C - 27C of FIG. 27A. FIG. 27D is a cross sectional view taken on line 27D - 27D of FIG. 27A. In the figures, like reference numerals indicate the corresponding optical surfaces shown in FIGs. 26A and 26B.

The optical surface 121a is an inclined surface having a normal vector in a cross section 27B - 27B in FIG. 27A. The optical surfaces 122a and 122b are parallel to each other. Each of the optical surfaces 122a and 122b is an inclined surface having a normal vector in a cross section 27D - 27D in FIG. 27A. The cross section 27B - 27B and a cross section 27C - 27C are parallel to each other. The cross section 27B - 27B and the cross section 27D - 27D form an angle of 45 degrees.

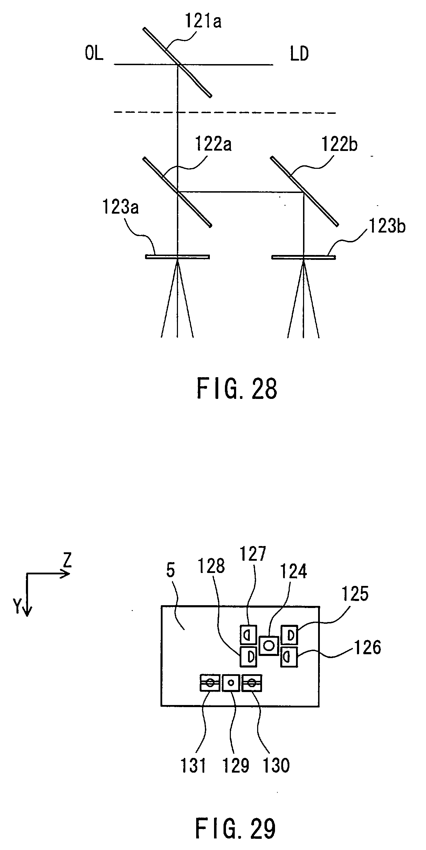

FIG. 28 is a schematic diagram for explaining light splitting in the beam splitting element 2 shown in FIGs. 26A, 26B and FIGs. 27A to 27D. In the figure, like reference numerals indicate the corresponding optical surfaces shown in FIGs. 26A, 26B and FIGs. 27A to 27D. Further, a dotted line in the figure is intended to show different states where a plane of the figure above the dotted line is rotated 45 degrees around an optical axis with respect to a plane of the figure below the dotted line. In FIGs. 26A to 28, the optical surface 121a transmits 70% of a P-polarized light component while reflecting 30% of the P-polarized light component and reflects substantially 100% of an S-polarized light component. The optical surface 122a transmits substantially 100% of a P-polarized light component and reflects substantially 100% of an S-polarized light component. The optical surface 122b reflects substantially 100% of a light beam. Each of the diffraction gratings 123a and 123b transmits 50% of a light beam and diffracts 20% each of light beams as ±1st-order diffracted light beams. The diffraction grating 123a includes two regions of different grating patterns from each other, and has a function of diffracting or transmitting light beams incident on the respective regions in different directions from each other. The diffraction grating 123b has a lens function of allowing focusing positions of ±1st-order diffracted light beams to be shifted in an optical axis direction.

FIG. 29 is a plan view of light-receiving regions and light-receiving spots on the photodetector 5 according to Embodiment 6 of the present invention. In the figure, reference numerals 124 to 131 denote light-receiving portions.

The beam splitting element 2 according to this embodiment is fabricated by the following manner. As in the method described with regard to Embodiment 1, a member formed of a laminate of glass plates, in which an optical film having an optical function is provided on each of joint surfaces between the glass plates, is cut at a predetermined angle (for example, 45 degrees) with respect to the joint surfaces so that cutting surfaces are parallel to each other. Two pieces of beam splitter substrates thus obtained and a diffraction substrate formed of a glass plate with diffraction gratings formed on one face are joined, and a joined body thus obtained is cut so as to form the beam splitting element 2. In this embodiment, in the process steps described on Embodiment 1 with reference to FIGs. 6A to 6E, the glass plate with the diffraction gratings formed on one face is laminated on the second beam splitter substrate 22 on a side opposite the first beam splitter substrate 21.

In the following description, an operation of an optical head having the above-mentioned configuration will be explained with reference to FIGs. 1 and 28. The light beam 6 emitted from the semiconductor laser 1 is incident on the beam splitting element 2 to be incident on the optical surface 121a as a P-polarized light beam. The transmitted light beam through the optical surface 121a is emitted from the beam splitting element 2 to be focused on the optical disk 4 by the objective lens 3. The light beam whose polarization direction is rotated slightly by the Kerr effect on the optical disk 4 is reflected therefrom, and then is incident again on the beam splitting element 2 through the objective lens 3. Of the light beam, 30% of a P-polarized light component and an S-polarized light component generated by the Kerr effect are reflected from the optical surface 121a to be incident on the optical surface 122a.

The optical surfaces 122a and 122b are parallel to a virtual plane obtained by rotating the optical surface 121a 45 degrees around the optical axis. Therefore, a polarized light component in an xz plane that constitutes a major part of a reflected light beam from the optical disk 4 is incident on the optical surface 121a as a P-polarized light beam while being incident on the optical surface 122a as a polarized light beam obtained by rotating the P-polarized light beam or an S-polarized light beam 45 degrees around the optical axis. The optical surface 122a has a function of separating a light beam by transmitting a P-polarized light component and by reflecting an S-polarized light component. The light beam incident on the optical surface 122a is separated at a ratio of substantially 1 : 1 by transmission and reflection.

The P-polarized light beam that has been transmitted through the optical surface 122a is incident on the diffraction grating 123a. Both of the respective transmitted light beams through the two regions of the diffraction grating 123a are led to the light-receiving portion 124, and ±1st-order diffracted light beams formed by each of the two regions of the diffraction grating 123a are in directions that differ according to the region. The ±1st-order diffracted light beams formed by one of the regions are led to the light-receiving portions 125 and 128, respectively. The ±1st-order diffracted light beams formed by the other region are led to the light-receiving portions 126 and 127, respectively. By performing a differential calculation on a sum signal of signals detected by the light-receiving portions 125 and 128 and a sum signal of signals detected by the light-receiving portions 126 and 127, a tracking error signal can be obtained by the so-called push-pull method.

The S-polarized light beam that has been reflected from the optical surface 122a is reflected from the optical surface 122b to be incident on the diffraction grating 123b. The transmitted light beam through the diffraction grating 123b is led to the light-receiving portion 129. In the diffraction grating 123b, ±1st-order diffracted light beams are focused in positions shifted in the optical axis direction, respectively. One of the ±1st-order diffracted light beams is focused on a near side of a photodetector with respect to a beam splitting element, and the other is focused on a far side of the photodetector with respect to the beam splitting element. The ±1st-order diffracted light beams are led to the three-divided light-receiving portions 130 and 131, respectively, and thus a focus error signal can be obtained by the so-called SSD method.

Furthermore, by performing a differential calculation on signals obtained by receiving the P-polarized light beams incident on the light-receiving portion 124 and the S-polarized light beam incident on the light-receiving portion 129, a magneto-optical signal can be obtained.

In this embodiment, a diffraction grating is used for splitting reflected light from a disk. Thus, the number of optical surfaces in a beam splitting element can be reduced, thereby allowing a reduction in man-hours, and thus further cost reduction can be achieved. Further, a light beam is divided for the detection of a tracking error signal on a surface of the beam splitting element rather than on a photodetector. Thus, the light beam can be increased in diameter in a position where the light beam is divided, thereby allowing the influence of a relative positional shift of the beam splitting element to be reduced.

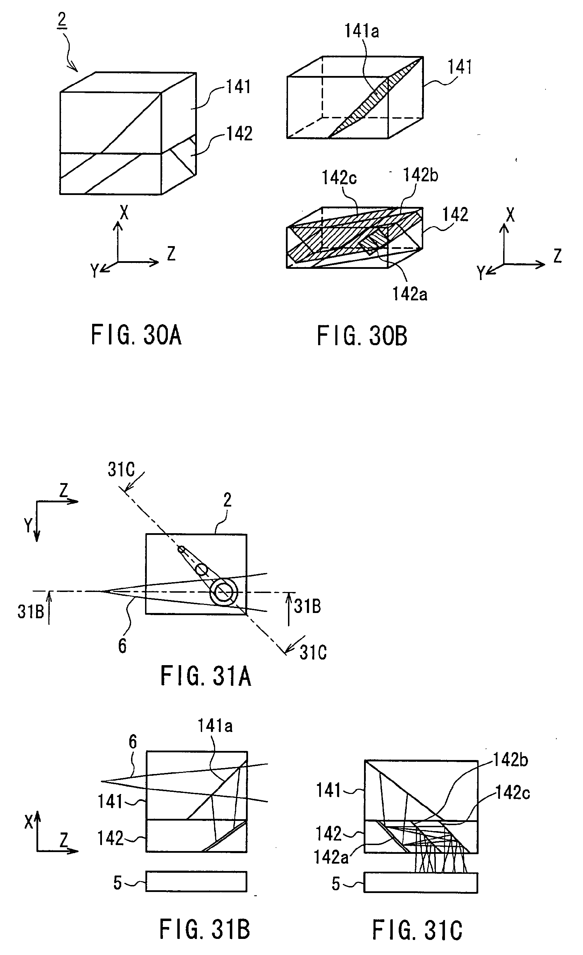

Next, another form of this embodiment with a configuration simplified by using a diffraction grating will be described with reference to FIGs. 30A to 33. In this embodiment, other constituent components other than a beam splitting element 2 and a photodetector 5 have the same configurations as those described with regard to Embodiments 1 to 5, for which duplicate descriptions are omitted.

FIGs. 30A and 30B are a perspective view and a perspective exploded view of the beam splitting element 2 according to another form of Embodiment 6 of the present invention, respectively. In the figures, reference numerals 141 and 142 denote a first substrate and a second substrate, respectively, each fabricated by cutting a laminate of glass substrates so that cutting surfaces are parallel to each other. The first substrate 141 and the second substrate 142 are joined so as to form the beam splitting element 2. Further, reference numerals 141a and 142a to 142c denote optical surfaces provided in the first substrate 141 and the second substrate 142, respectively. On each of the optical surfaces 141a, 142b and 142c, an optical film having one optical function is provided. On the optical surface 142a, a reflective diffraction grating is provided.

FIGs. 31A to 31C are explanatory diagrams showing the optical surfaces and optical paths in the beam splitting element 2 according to this embodiment. FIG. 31A shows the optical paths in the beam splitting element 2 as seen from a positive side of an x axis. FIG. 31B is a cross sectional view taken on line 31B - 31B of FIG. 31A. FIG. 31C is a cross sectional view taken on line 31C - 31C of FIG. 31A. In the figures, like reference numerals indicate the corresponding optical surfaces shown in FIGs. 30A and 30B.

The optical surface 141a is an inclined surface having a normal vector in a cross section 31B - 31B in FIG. 31A. The optical surfaces 142a to 142c are parallel to each other. Each of the optical surfaces 142a to 142c is an inclined surface having a normal vector in a cross section 31C - 31C in FIG. 31A. The cross section 31B - 31B and the cross section 31C - 31C form an angle of 45 degrees.

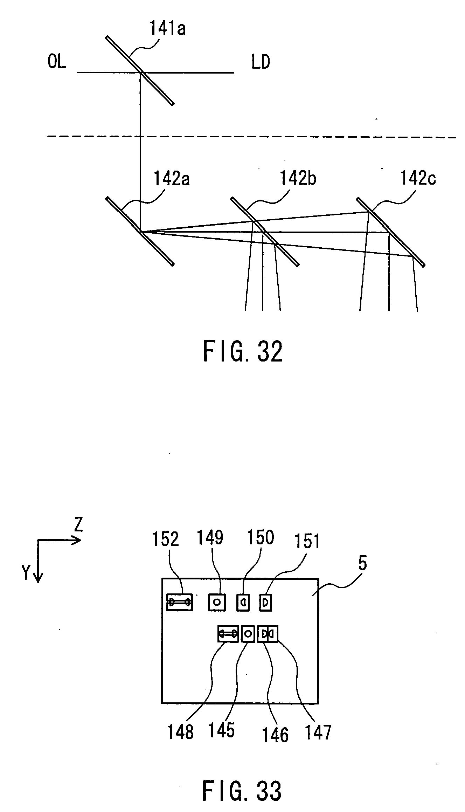

FIG. 32 is a schematic diagram for explaining light splitting in the beam splitting element 2 shown in FIGs. 30A, 30B and FIGs. 31A to 31C. In the figure, like reference numerals indicate the corresponding optical surfaces shown in FIGs. 30A, 30B and FIGs. 31A to 31C. Further, a dotted line in the figure is intended to show different states where a plane of the figure above the dotted line is rotated 45 degrees around an optical axis with respect to a plane of the figure below the dotted line. In FIGs. 30A to 32, the optical surface 141a transmits 70% of a P-polarized light component while reflecting 30% of the P-polarized light component and reflects substantially 100% of an S-polarized light component. The optical surface 142a includes two regions of different grating patterns from each other, on which a reflective diffraction grating having a function of diffracting and reflecting light beams incident on the respective regions in different directions from each other is formed. On the optical surface 142a, 50% of a light beam is reflected therefrom as a 0th-order light beam, and 20% each of light beams are diffracted as ±1st-order diffracted light beams to be reflected therefrom. The optical surface 142b transmits substantially 100% of a P-polarized light component and reflects substantially 100% of an S-polarized light component. The optical surface 142c reflects substantially 100% of a light beam.

FIG. 33 is a plan view of light-receiving regions and light-receiving spots on the photodetector 5, and reference numerals 145 to 152 denote light-receiving portions.

The beam splitting element 2 according to this embodiment is fabricated by the following manner. As in the method described with regard to Embodiment 1 (refer to FIGs. 6A to 6E), a member formed of a laminate of glass plates, in which one functional element formed of a diffraction grating or an optical film is provided on each of joint surfaces between the glass plates, is cut at a predetermined angle (for example, 45 degrees) with respect to the joint surfaces so that cutting surfaces are parallel to each other. Two pieces of beam splitter substrates thus obtained are joined, and a joined body thus obtained is cut so as to form the beam splitting element 2.

In the following description, an operation of an optical head having the above-mentioned configuration will be explained with reference to FIGs. 1 and 32. The light beam 6 emitted from the semiconductor laser 1 is incident on the beam splitting element 2 to be incident on the optical surface 141a as a P-polarized light beam. The transmitted light beam through the optical surface 141a is emitted from the beam splitting element 2 to be focused on the optical disk 4 by the objective lens 3. The light beam whose polarization direction is rotated slightly by the Kerr effect on the optical disk 4 is reflected therefrom, and then is incident again on the beam splitting element 2 through the objective lens 3. Of the light beam, 30% of a P-polarized light component and an S-polarized light component generated by the Kerr effect are reflected from the optical surface 141a to be incident on the optical surface 142a.

The light beam incident on each of the two regions of the optical surface 142a is divided spatially into two, and the respective light beams thus formed are diffracted and reflected in different directions from each other. Of the light beam incident on each of the regions, 50% is reflected as a 0th-order light beam, 20% is reflected as a +1st-order light beam, and 20% is reflected as a -1st-order light beam, and all of the light beams are incident on the optical surface 142b. The optical surface 142b is parallel to a virtual plane obtained by rotating the optical surface 141a 45 degrees around the optical axis, and has a function of separating a light beam by transmitting a P-polarized light component and by reflecting an S-polarized light component. Therefore, on the optical surface 142b, the 0th-order light beam and the ±1st-orde diffracted light beams formed by the optical surface 142a are separated at a ratio of substantially 1 : 1 by transmission and reflection.

Of the 0th-order light beam reflected from the optical surface 142a, the S-polarized light component that has been reflected from the optical surface 142b is led to the light-receiving portion 145, and the P-polarized light beam that has been transmitted through the optical surface 142b is reflected from the optical surface 142c to be led to the light-receiving portion 149. Based on a differential signal of signals detected by the light-receiving portions 145 and 149, a magneto-optical signal can be obtained.

Of the +1st-order light beam in one of the two regions of the optical surface 142a, one part is reflected from the optical surface 142b to be incident on the light-receiving portion 146, and the rest is transmitted through the optical surface 142b and reflected from the optical surface 142c to be incident on the light-receiving portion 150.

Of the +1st-order light beam in the other of the two regions of the optical surface 142a, one part is reflected from the optical surface 142b to be incident on the light-receiving portion 147, and the rest is transmitted through the optical surface 142b and reflected from the optical surface 142c to be incident on the light-receiving portion 151.

Based on a differential signal of a sum signal of signals detected by the light-receiving portions 146 and 150 and a sum signal of signals detected by the light-receiving portions 147 and 151, a tracking error signal can be obtained by the so-called push-pull method.

Of the -1st-order light beam in each of the two regions of the optical surface 142a, one part is reflected from the optical surface 142b, and the rest is transmitted through the optical surface 142b to be reflected from the optical surface 142c. The light beams reflected from the optical surfaces 142b and 142c are led to the three-divided light-receiving portions 148 and 152, respectively, and thus a focus error signal can be obtained by the so-called SSD method.

As in the foregoing embodiment, in this embodiment, a diffraction grating is used for splitting reflected light from a disk. Thus, the number of optical surfaces can be reduced, thereby allowing a reduction in man-hours of a joining operation or the like, and thus further cost reduction can be achieved. Further, a light beam is divided for the detection of a tracking error signal on an optical surface in a beam splitting element rather than on a photodetector. Thus, the light beam can be increased in diameter in a position where the light beam is divided, thereby allowing the influence of a relative positional shift of the beam splitting element to be reduced.

### (Embodiment 7)

In this embodiment, constituent components other than a beam splitting element 2 and a photodetector 5 have the same configurations as those described with regard to Embodiments 1 to 6, for which duplicate descriptions are omitted. In this embodiment, an optical disk 4 is, for example, an optical disk other than a magneto-optical disk on which signals are recorded by using a difference in reflectance between recording marks.

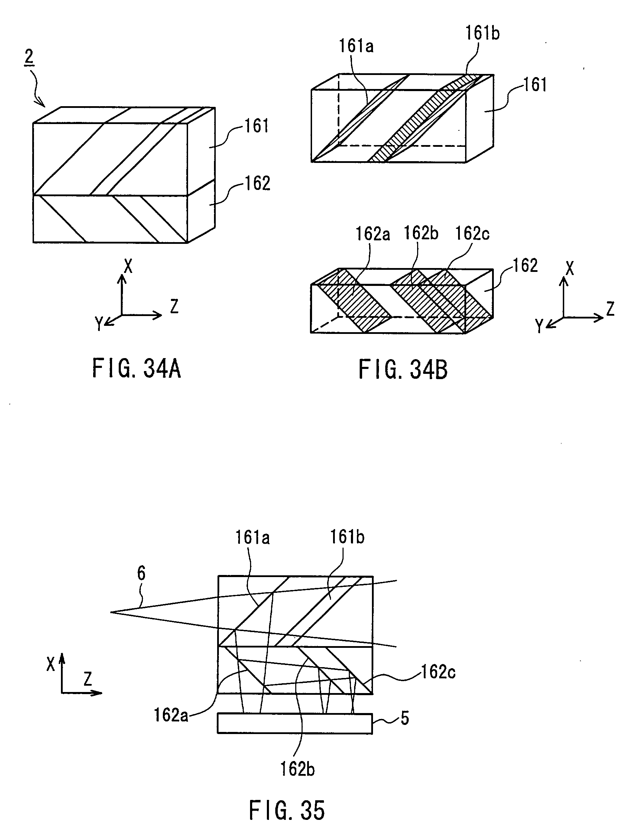

FIGs. 34A and 34B are a perspective view and a perspective exploded view of the beam splitting element 2 according to Embodiment 7 of the present invention, respectively. In the figures, reference numerals 161 denotes a first substrate formed by cutting a member formed of a laminate of glass substrates and a 1/4 wavelength plate so that cutting surfaces are parallel to each other, and reference numeral 162 denotes a second substrate formed by cutting a laminate of glass substrates so that cutting surfaces are parallel to each other. The first substrate 161 and the second substrate 162 are joined so as to form the beam splitting element 2. Further, reference numeral 161b denotes the 1/4 wavelength plate by which a phase shift of 90 degrees is produced between a P-polarized light component and an S-polarized light component. Further, reference numerals 161a and 162a to 162c denote optical surfaces in the first substrate 161 and the second substrate 162, respectively. On each of the optical surfaces, an optical film having one optical function is provided.

FIG. 35 is an explanatory diagram showing the optical surfaces and optical paths in the beam splitting element 2. In the figure, like reference numerals indicate the corresponding optical surfaces shown in FIGs. 34A and 34B. Each of the 1/4 wavelength plate 161b and the optical surfaces 161a and 162a to 162c is an inclined surface having a normal vector in an xz plane.

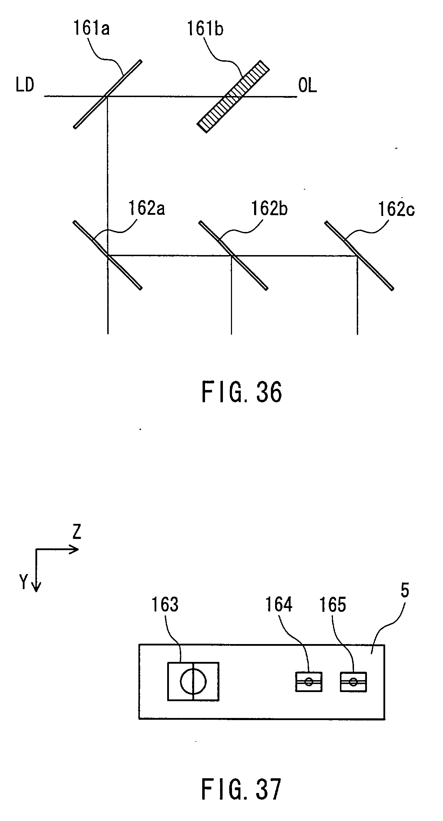

FIG. 36 is a schematic diagram for explaining light splitting in the beam splitting element 2 shown in FIGs. 34A, 34B and FIG. 35. In the figure, like reference numerals indicate the corresponding optical surfaces shown in FIGs. 34A, 34B and FIG. 35. In FIGs. 34A to 36, the optical surface 161a transmits 100% of a P-polarized light component and reflects substantially 100% of an S-polarized light component. Each of the optical surfaces 162a and 162b is a non-polarization-dependent surface and transmits 50% of a light beam while reflecting 50% of the light beam. The optical surface 162c reflects substantially 100% of a light beam.

FIG. 37 is a plan view of light-receiving regions and light-receiving spots on the photodetector 5 according to Embodiment 7 of the present invention. In the figure, reference numeral 163 denotes a two-divided light-receiving portion, and reference numerals 164 and 165 denote three-divided light-receiving portions.

The beam splitting element 2 according to this embodiment is fabricated in the following manner. Initially, a first beam splitter substrate is fabricated by cutting a member formed of a laminated of glass plates and a 1/4 wavelength plate at a predetermined angle (for example, 45 degrees) with respect to a joint surface so that cutting surfaces are parallel to each other. Further, a second beam splitter substrate is fabricated by cutting a member formed of a laminate of glass plates, in which an optical film having an optical function is provided on each of joint surfaces between the glass plates, at a predetermined angle (for example, 45 degrees) with respect to the joint surfaces so that cutting surfaces are parallel to each other. Then, the first beam splitter substrate and the second beam splitter substrate are joined, and a joined body thus obtained is cut so as to form the beam splitting element 2. Basically, the process steps of manufacturing the beam splitting element 2 are the same as those described on Embodiment 1 with reference to FIGs. 6A to 6E. In this case, however, in place of the first beam splitter substrate 21, the above-mentioned first beam splitter substrate including the 1/4 wavelength plate is used. Further, in Embodiment 1, in a process step shown in FIG. 6C, the substrates were joined so that the straight line 21a and the straight line 22a formed an angle of 45 degrees. However, in this embodiment, the substrates are joined so that the straight line 21a and the straight line 22a are parallel to each other.

In the following description, an operation of an optical head having the above-mentioned configuration will be explained with reference to FIGs. 1 and 36. The light beam 6 emitted from the semiconductor laser 1 is incident on the beam splitting element 2 to be incident on the optical surface 161a as a P-polarized light beam, and substantially 100% of the light beam is transmitted therethrough. The transmitted light beam through the optical surface 161a is transmitted through the 1/4 wavelength plate 161b to be turned into a circularly polarized light beam. The light beam is emitted from the beam splitting element 2 to be focused on the optical disk 4 by the objective lens 3. On the optical disk 4, the light beam is reflected under modulation due to a change in reflectance, and is incident again on the beam splitting element 2 through the objective lens 3 to be incident on the 1/4 wavelength plate 161b. The reflected light beam that has been transmitted through the 1/4 wavelength plate 161b is turned back into a linearly polarized light beam. Then, the light beam is incident on the optical surface 161a as an S-polarized light beam, and substantially 100% of the light beam is reflected therefrom.

The reflected light beam from the optical surface 161a is incident on the optical surface 162a. The transmitted light beam through the optical surface 162a is received by the two-divided light-receiving portion 163 on the photodetector 5. Based on a differential signal thus obtained, a tracking error signal can be obtained by the so-called push-pull method. Further, based on an addition signal of light-receiving signals of the respective regions of the two-divided light-receiving portion, an RF signal can be obtained. The reflected light beam from the optical surface 162a is incident on the optical surface 162b. Of the light beam that has been incident on the optical surface 162b, one part is reflected therefrom, and another part is transmitted therethrough to be reflected from the optical surface 162c. The reflected light beams from the optical surfaces 162b and 162c are led to the three-divided light-receiving portions 164 and 165 on the photodetector 5, respectively, and thus a focus error signal can be obtained by the so-called SSD method.

The above-mentioned configuration according to this embodiment is applicable to, for example, an optical head for phase change recording. As in the foregoing embodiments, in this embodiment, all beam splitting functions are integrated in one beam splitting element. Thus, the number of components and man-hours can be reduced, thereby achieving a cost reduction. Further, 100% of a light amount of a light source can be emitted from a beam splitting element, and a diffraction element is not used. Thus, a high light utilization efficiency can be attained, and the generation of stray light originating in 1st-order diffracted light formed by the diffraction element on an optical path to a disk is prevented.

### (Embodiment 8)

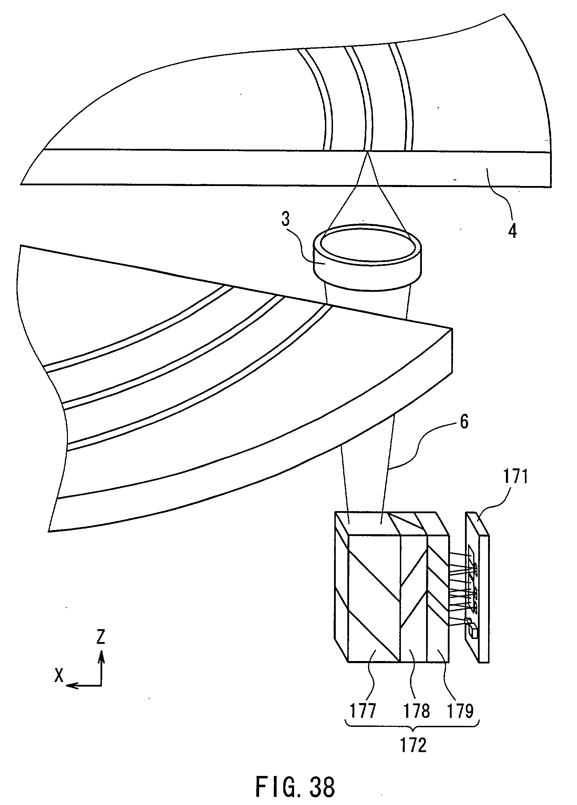

In this embodiment, constituent components other than a semiconductor laser 1, a beam splitting element 2 and a photodetector 5 have the same configurations as those described with regard to Embodiments 1 to 7, for which duplicate descriptions are omitted. FIG. 38 shows a configuration of an optical head according to Embodiment 8 of the present invention. In the figure, reference numeral 171 denotes a light-receiving/emitting element in which a semiconductor laser and a photodetector are provided on a common substrate, and reference numeral 172 denotes a beam splitting element formed by combining a plurality of laminates of glass substrates. Other constituent components are the same as those shown in FIG. 1, and like reference numerals denote the corresponding constituent components.

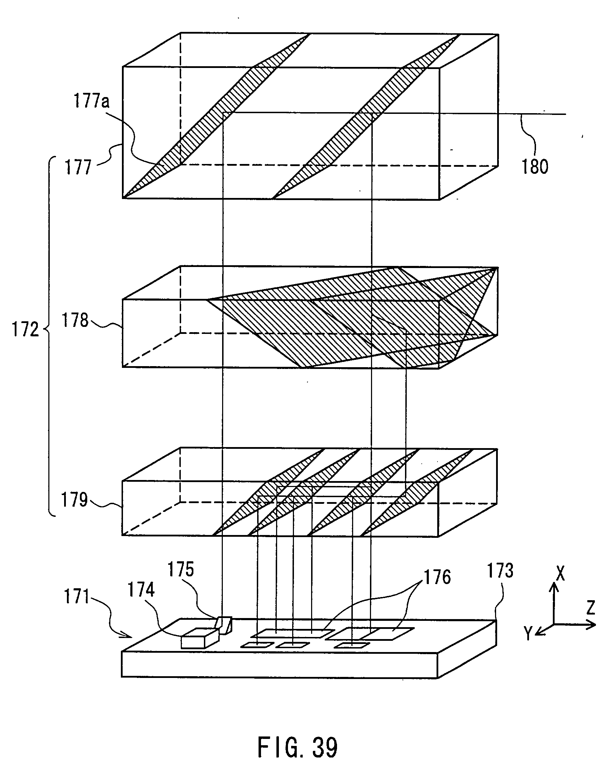

FIG. 39 is a schematic diagram for explaining a configuration according to this embodiment. In the figure, reference numerals 173, 174, 175 and 176 denote a silicon substrate, a semiconductor laser that emits light polarized in a z-axis direction in the figure, a micro mirror and light-receiving portions, respectively. The semiconductor laser 174, the micro mirror 175 and the light-receiving portions 176 are integrated on the silicon substrate 173 so as to form the light-receiving/emitting element 171. The figure shows an exploded view of the beam splitting element 172, in which reference numerals 177 to 179 denote beam splitter substrates constituting the beam splitting element 172. Each of the beam splitter substrates are fabricated by cutting a laminate of glass substrates at a predetermined angle with respect to joint surfaces between the glass substrates so that cutting surfaces are parallel to each other. Further, reference numeral 180 denotes optical paths.

The beam splitting element 172 according to this embodiment has completely the same configuration as that of the beam splitting element according to Embodiment 5 (FIGs. 22A and 22B) except that an optical surface 177a that reflects substantially 100% of a light beam is added. Further, the light-receiving portions 176 are arranged in the same manner as in Embodiment 5 (refer to FIG. 25).

In the optical head having the above-mentioned configuration, a light beam emitted from the semiconductor laser 174 is reflected from the micro mirror 175 and is incident on the beam splitting element 172 to be reflected from the optical surface 177a. The light beam is polarized in an x-axis direction in the figure. Then, after the same operation as that in Embodiment 5 is performed, a servo signal and an RF signal are detected.

In this embodiment, the optical surface 177a that reflects substantially 100% of a light beam is added to the beam splitting element in each of the foregoing embodiments, and a photodetector and a semiconductor laser are integrated. Thus, the number of components and man-hours can be reduced, thereby achieving further cost reduction and a substantial size reduction.

In this embodiment, based on the configuration according to Embodiment 5, the semiconductor laser and the photodetector are integrated. This integrated configuration also can provide the same effect when used in other embodiments.

Furthermore, in the above-mentioned embodiment, the semiconductor laser and the photodetector were provided on the common substrate 173. However, the semiconductor laser and the photodetector may be provided on different substrates that are housed in a common housing. This configuration also can achieve a reduction in the number of components and a size reduction.

### (Embodiment 9)

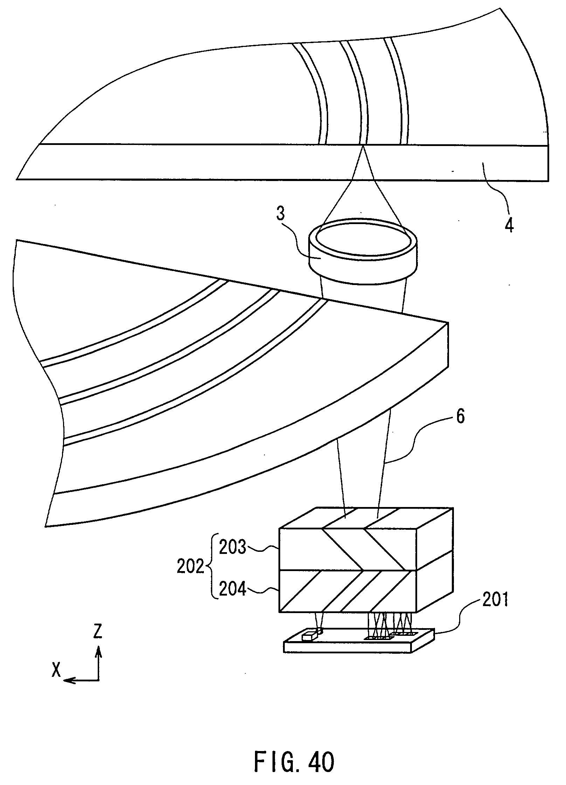

In this embodiment, constituent components other than a light-receiving/emitting element and a beam splitting element have the same configurations as those described with regard to Embodiment 8, for which duplicate descriptions are omitted. FIG. 40 shows a configuration of an optical head according to Embodiment 9 of the present invention. In the figure, reference numeral 201 denotes a light-receiving/emitting element in which a semiconductor laser and a photodetector are provided on a common substrate, and reference numeral 202 denotes a beam splitting element. Other constituent components are the same as those shown in FIG. 1, and like reference numerals denote the corresponding constituent components.

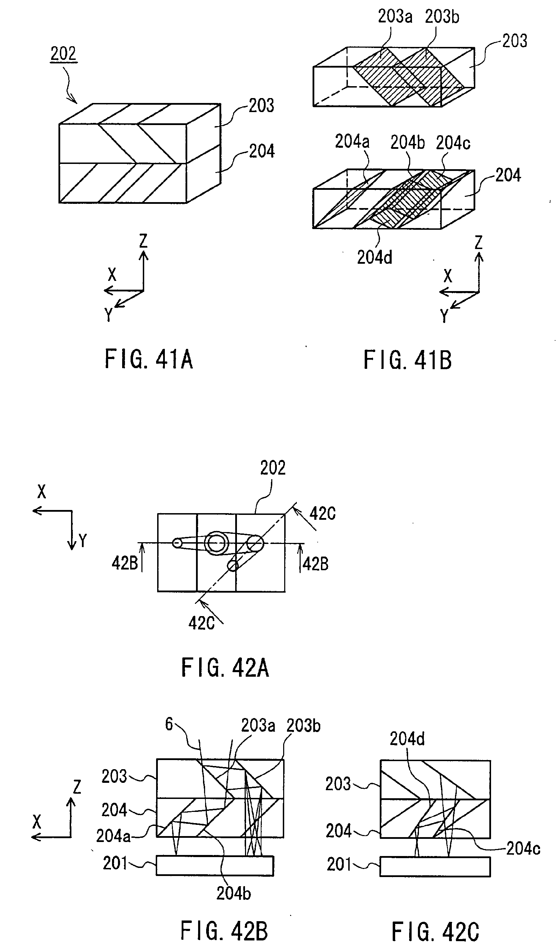

FIGs. 41A and 41B are a perspective view and a perspective exploded view of the beam splitting element 202 according to Embodiment 9 of the present invention, respectively. In the figures, reference numerals 203 and 204 denote a first substrate and a second substrate, respectively, each formed by cutting a laminate of glass substrates so that cutting surfaces are parallel to each other. The first substrate 203 and the second substrate 204 are joined so as to form the beam splitting element 202. Further, reference numerals 203a, 203b and 204a to 204d denote optical surfaces in the first substrate 203 and the second substrate 204, respectively. On each of the optical surfaces 203a and 204a to 204d, an optical film having one optical function is provided. On the optical surface 203b, a reflective diffraction grating is provided.

FIGs. 42A to 42C are explanatory diagrams showing the optical surfaces and optical paths in the beam splitting element 202. FIG. 42A shows the optical paths in the beam splitting element 202 as seen from a positive side of an x axis. FIG. 42B is a cross sectional view taken on line 42B - 42B of FIG. 42A. FIG. 42C is a cross sectional view taken on line 42C - 42C of FIG. 42A. In the figures, like reference numerals indicate the corresponding optical surfaces shown in FIGs. 41A and 41B.

Each of the optical surfaces 203a, 203b, 204a and 204b is an inclined surface having a normal vector in a cross section 42B - 42B in FIG. 42A. The optical surfaces 204c and 204d are parallel to each other. Each of the optical surfaces 204c and 204d is an inclined surface having a normal vector in a cross section 42C - 42C in FIG. 42A. The cross section 42B - 42B and the cross section 42C - 42C form an angle of 45 degrees.

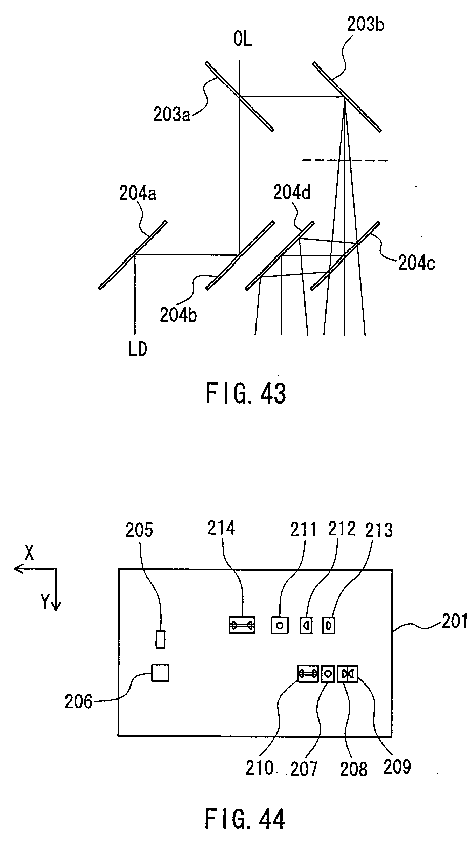

FIG. 43 is a schematic diagram for explaining light splitting in the beam splitting element 202 shown in FIGs. 41A, 41B and FIGs. 42A to 42C. In the figure, like reference numerals indicate the corresponding optical surfaces shown in FIGs. 41A, 41B and FIGs. 42A to 42C. Further, a dotted line in the figure is intended to show different states where a plane of the figure above the dotted line is rotated 45 degrees around an optical axis with respect to a plane of the figure below the dotted line.

In FIGs. 41A to 43, the optical surface 203a transmits 70% of a P-polarized light component while reflecting 30% of the P-polarized light component and reflects substantially 100% of an S-polarized light component. The optical surface 203b includes two regions of different grating patterns from each other, on which a reflective diffraction grating having a function of diffracting and reflecting light beams incident on the respective regions in different directions from each other is formed. On the optical surface 203b, 50% of a light beam is reflected therefrom as a 0th-order light beam, and 20% each of light beams are diffracted as ±1st-order diffracted light beams and reflected therefrom. The optical surface 204c transmits substantially 100% of a P-polarized light component and reflects substantially 100% of an S-polarized light component. Each of the optical surfaces 204a, 204b and 204d reflects substantially 100% of a light beam.

FIG. 44 is a plan view of light-receiving portions and light-receiving spots on the light-receiving/emitting element 201. In the figure, reference numerals 205 and 206 denote a semiconductor laser that emits light polarized in an x-axis direction in the figure and a micro mirror, respectively. Further, reference numerals 207 to 214 denote light-receiving portions.

In the following description, an operation of the optical head having the above-mentioned configuration will be explained with reference to FIGs. 40, 43 and 44. Alight beam 6 emitted from the semiconductor laser 205 is reflected by the micro mirror 206 to be incident on the beam splitting element 202. Then, the light beam is reflected from the optical surfaces 204a and 204b to be incident on the optical surface 203a as a P-polarized light beam.

The transmitted light beam through the optical surface 203a is emitted from the beam splitting element 202 to be focused on an optical disk 4 by an objective lens 3. The light beam whose polarization direction is rotated slightly by the Kerr effect on the optical disk 4 is reflected therefrom, and then is incident again on the beam splitting element 202 through the objective lens 3. Of the light beam, 30% of a P-polarized light component and an S-polarized light component generated by the Kerr effect are reflected from the optical surface 203a to be incident on the optical surface 203b.

The light beam incident on each of the two regions of the optical surface 203b is divided spatially into two, and the respective light beams thus formed are diffracted and reflected in different directions from each other. Of the light beams incident on each of the regions, 50% is reflected as a 0th-order light beam, 20% is reflected as a +1st-order light beam, and 20% is reflected as a -1st-order light beam, and all of the light beams are incident on the optical surface 204c.

The optical surface 204c is parallel to a virtual plane obtained by rotating the optical surface203a 45 degrees around the optical axis, and has a function of separating a light beam by transmitting a P-polarized light component and by reflecting an S-polarized light component. Therefore, on the optical surface 204c, the 0th-order light beam and the ±1st-order diffracted light beams formed by the optical surface 203b are separated at a ratio of substantially 1 : 1 by transmission and reflection.

Of the 0th-order light beam reflected from the optical surface 203b, the P-polarized light component that has been transmitted through the optical surface 204c is led to the light-receiving portion 207, and the S-polarized light component that has been reflected from the optical surface 204c is reflected from the optical surface 204d to be led to the light-receiving portion 211. Based on a differential signal of signals detected by the light-receiving portions 207 and 211, a magneto-optical signal can be obtained.

Of the +1st-order light beam in one of the two regions of the optical surface 203b, one part is transmitted through the optical surface 204c to be incident on the light-receiving portion 208, and the rest is reflected from the optical surface 204c and then is reflected from the optical surface 204d to be incident on the light-receiving portion 212.

Of the +1st-order light beam in the other of the two regions of the optical surface 203b, one part is transmitted through the optical surface 204c to be incident on the light-receiving portion 209, and the rest is reflected from the optical surface 204c and then is reflected from the optical surface 204d to be incident on the light-receiving portion 213.

Based on a differential signal of a sum signal of signals detected by the light-receiving portions 208 and 212 and a sum signal of signals detected by the light-receiving portions 209 and 213, a tracking error signal can be obtained by the so-called push-pull method.

Of the -1st-order light beam in each of the two regions of the optical surface 203b, one part is transmitted through the optical surface 204c, and the rest is reflected from the optical surface 204c and then is reflected from the optical surface 204d. The light beam transmitted through the optical surface 204c and the light beam reflected from the optical surface 204d are led to the three-divided light-receiving portions 210 and 214, respectively, and thus a focus error signal can be detected by the so-called SSD method.

As in Embodiment 8, in this embodiment, a photodetector and a semiconductor laser are integrated, and thus the number of components and man-hours can be reduced, thereby achieving cost and size reductions.

In this embodiment, the optical reflective surfaces 204a and 204b are provided, and thus the length of an optical path can be adjusted so that a reflected light beam from the optical disk 4 is brought into focus in the vicinity of a light-receiving surface of the light-receiving/emitting element 201, thereby allowing a focus error signal to be obtained by the SSD method. The optical surfaces 204a and 204b are not parallel to the optical surfaces 204c and 204d, and thus the fabrication method described with regard to Embodiment 1 is not applicable to this embodiment.

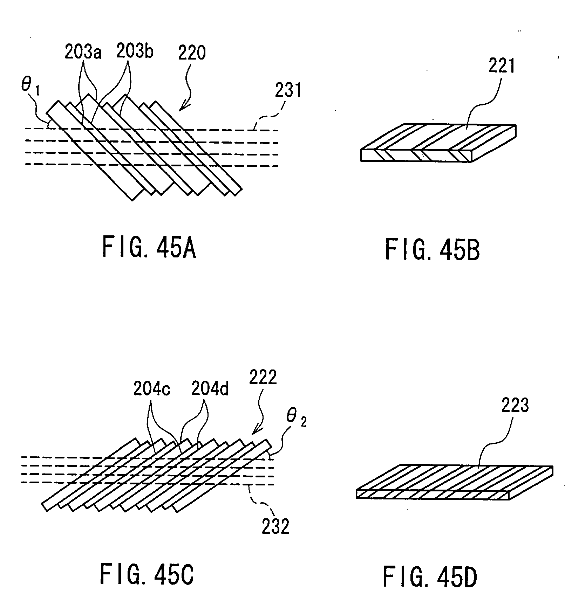

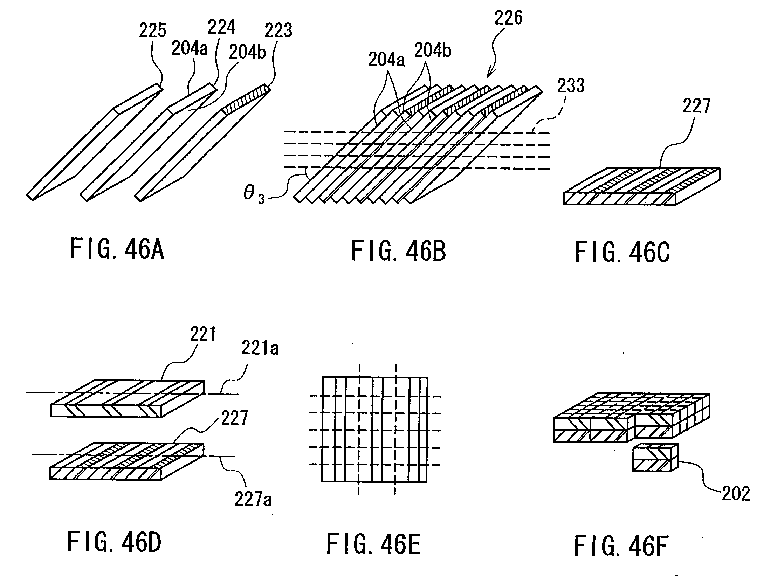

FIGs. 45A to 45D and FIGs. 46A to 46F are schematic diagrams for explaining a process of fabricating the beam splitting element 202 according to this embodiment. In the following description, the process steps of fabricating the beam splitting element 202 will be outlined with reference to these figures.

Initially, a member 220 shown in FIG. 45Ais fabricated by laminating glass plates. On joint surfaces (first joint surfaces) between the glass plates of the member 220, the optical film and the reflective diffraction element to be formed respectively on the optical surfaces 203a and 203b of the first substrate are provided, respectively. In the figures, reference numerals 203a and 203b indicate a state where the optical film and the reflective diffraction element to be formed on the respective optical surfaces of the first substrate 203 are provided on the joint surfaces, respectively. A first beam splitter substrate 221 shown in FIG. 45B is fabricated by cutting the member 220 along dotted lines in FIG. 45A, namely along surfaces (first cutting surfaces 231) that cross the joint surfaces (first joint surfaces) of the glass plates at an angle of substantially 45 degrees (angle θ1 in FIG. 45A) so that cutting surfaces are parallel to each other.

Furthermore, a member 222 shown in FIG. 45C also is fabricated by laminating glass plates. On joint surfaces (second joint surfaces) between the glass plates of the member 222, the optical films to be formed on the optical surfaces 204c and 204d of the second substrate 204 are provided, respectively. In the figures, reference numerals 204c and 204d indicate a state where the optical films to be formed on the optical surfaces of the second substrate are provided on the joint surfaces, respectively. A second beam splitter substrate 223 shown in FIG. 45D is fabricated by cutting the member 222 along dotted lines in FIG. 45C, namely along surfaces (second cutting surfaces 232) that cross the joint surfaces (second joint surfaces) of the glass plates at an angle of substantially 35.3 degrees (angle θ2 in FIG. 45C) so that cutting surfaces are parallel to each other.

Next, as shown in FIG. 46A, the second beam splitter substrate 223, a glass plate 224 with a reflective film 204a formed on one face and a reflective film 204b formed on the other face, and a glass plate 225 without a reflective film are combined into a unit member. As shown in FIG. 46B, a plurality of the unit members are laminated so as to form a member 226. Then, a third beam splitter substrate 227 shown in FIG. 46C is fabricated by cutting the member 226 along dotted lines in FIG. 46B, namely along surfaces (third cutting surfaces 233) that cross joint surfaces (third joint surfaces) between the substrate 223 and the glass plates 224 and 225 at an angle of substantially 45 degrees (angle θ3 in FIG. 46B) so that cutting surfaces are parallel to each other.

Next, as shown in FIG. 46D, the first beam splitter substrate 221 and the third beam splitter substrate 227 are joined to each other. In this case, a direction that is orthogonal to a straight line at which each of the first cutting surfaces 231 and each of the first joint surfaces cross each other and is parallel to the first cutting surfaces 231 is defined as a first direction 221a of the first beam splitter substrate 221. Further, a direction that is orthogonal to a straight line at which each of the third cutting surfaces 233 and each of the third joint surfaces cross each other and is parallel to the third cutting surfaces 233 is defined as a third direction 227a of the third beam splitter substrate 227. The first beam splitter substrate 221 and the third beam splitter substrate 227 are joined so that the first direction 221a and the third direction 227a are parallel to each other.

Finally, the beam splitting element 202 shown in FIG. 46F is obtained by cutting a joined body thus obtained along dotted lines shown in FIG. 46E, namely along surfaces parallel to the first direction 221a and the third direction 227a and along surfaces orthogonal to these surfaces.

Compared with the method described with regard to Embodiment 1, this fabrication method allows a reduction in loss of materials to be used, and is applicable to all of the foregoing embodiments.

According to this fabrication method, the optical surfaces 204c and 204d have an inclination angle of 54.7 degrees with respect to a bottom surface of the third beam splitter substrate 227 (surface on a side of the light-receiving/emitting element).

In the above-mentioned fabrication method, when the cutting angle θ2 of the second cutting surfaces 232 shown in FIG. 45C is set so as to be substantially 30 degrees, and the cutting angle θ3 of the third cutting surfaces 233 shown in FIG. 46B is set so as to be 35.3 degrees, an inclination angle of the optical surfaces 204c and 204d with respect to the bottom surface of the third beam splitter substrate 227 is 45 degrees. In this case, a light beam reflected from the optical surface 204c travels in a direction parallel to the bottom surface of the third beam splitter substrate 227, and thus the third beam splitter substrate 227 can be reduced in thickness. This allows an increased number of substrates to be obtained from the same amount of materials in a cutting process shown in FIG. 46B, thereby achieving a cost reduction.

As is apparent from the foregoing descriptions with regard to Embodiments 1 to 9, in the optical head according to the present invention, all beam splitting functions are integrated in one beam splitting element, and thus the number of components and man-hours can be reduced, thereby achieving a cost reduction. Further, a diffraction element is not provided on an optical path in which light is emitted from a light source to be transmitted through a beam splitting element to an objective lens, and the separation of a light beam is performed solely by transmission through and reflection from an optical film. Thus, a high light utilization efficiency can be attained, and the generation of stray light originating in 1st-order diffracted light on an optical path to an optical disk, which causes degradation in qualities of a servo signal and an RF signal, can be prevented.

## Claims

1. An optical element, comprising:
a first substrate (11) composed of a plurality of transparent base materials joined to each other through one or more first joint surfaces (11a), a functional element formed of a diffraction grating or an optical film being formed on each of the first joint surfaces (11a); and
a second substrate (12) composed of a plurality of transparent base materials joined to each other through at least two second joint surfaces (12a-12c) parallel to each other, a functional element formed of a diffraction grating or an optical film being formed on each of the second joint surfaces (12a-12c),
wherein the first substrate (11) and the second substrate (12) are joined to each other;
at least one part of light incident on the first substrate (11) is reflected from at least one of the first joint surfaces (11a) to be incident on the second substrate (12), and at least one part thereof is reflected from at least one of the second joint surfaces (12a-12c); and
a virtual plane including an incident light axis and a reflected light axis on the first joint surface (11a) and a virtual plane including an incident light axis and a reflected light axis on the second joint surface form an angle of substantially 45 degrees.

2. The optical element according to claim 1,
wherein a polarizing film having a transmittance and a reflectance with respect to a P-polarized light component different from those with respect to an S-polarized light component is formed on at least one of the first joint surfaces;
at least one of the second joint surfaces is disposed on an optical path of a light beam resulting from light splitting at the first joint surface, and a non-polarizing film that transmits one part of the light beam while reflecting another part of the light beam is formed on the at least one of the second joint surfaces; and
a polarizing film that substantially transmits a P-polarized light component and substantially reflects an S-polarized light component is formed on at least one of the other second joint surfaces.

3. The optical element according to claim 1,
wherein a polarizing film having a transmittance and a reflectance with respect to a P-polarized light component different from those with respect to an S-polarized light component is formed on at least one of the first joint surfaces; and
at least one of the second joint surfaces is disposed on an optical path of a light beam resulting from light splitting at the first joint surface, and a polarizing film that substantially transmits a P-polarized light component and substantially reflects an S-polarized light component is formed on the at least one of the second joint surfaces.

4. The optical element according to claim 1,
wherein a polarizing film having a transmittance and a reflectance with respect to a P-polarized light component different from those with respect to an S-polarized light component is formed on at least one of the first joint surfaces;
at least one of the second joint surfaces is disposed on an optical path of a light beam resulting from light splitting at the first joint surface, and a reflective diffraction grating is formed on the at least one of the second joint surfaces; and
a polarizing film that substantially transmits a P-polarized light component and substantially reflects an S-polarized light component is formed on at least one of the other second joint surfaces.

5. The optical element according to claim 1,
wherein the second substrate is inclined at a predetermined angle with respect to a light-emitting surface of the optical element.

6. The optical element according to claim 1,
wherein a polarizing film having a transmittance and a reflectance with respect to a P-polarized light component different from those with respect to an S-polarized light component is formed on at least one of the first joint surfaces;
a reflective diffraction grating is formed on at least one of the other first joint surfaces; and
at least one of the second joint surfaces is disposed on an optical path of a light beam reflected from the reflective diffraction grating, and a polarizing film that substantially transmits a P-polarized light component and substantially reflects an S-polarized light component is formed on the at least one of the second joint surfaces.

7. An optical head, comprising:
a light source that emits linearly polarized light;
an objective lens that focuses the light emitted from the light source on an information recording medium;
an optical element as claimed in claim 1 that is disposed on an optical path between the light source and the objective lens; and
a photodetector that receives the light from the information recording medium, which is split into a plurality of light beams by the optical element.

8. The optical head according to claim 7,
wherein the light source and the photodetector are provided in a common housing.

9. The optical head according to claim 7,
wherein, of the plurality of light beams resulting from light splitting by the optical element that are directed towards the photodetector, one of a pair of light beams is focused on a near side of a light-receiving surface on the photodetector with respect to the optical element, and the other is focused on a far side of the light-receiving surface on the photodetector with respect to the optical element; and
each of the pair of light beams is received by a three-divided light-receiving region on the photodetector so that a focus error signal can be obtained by performing a calculation.

10. The optical head according to claim 7,
wherein at least one of the plurality of light beams resulting from light splitting by the optical element that are directed towards the photodetector is received by a multi-divided light-receiving region on the photodetector so that a tracking error signal can be obtained by performing a calculation.

11. An optical element, comprising:
a first substrate composed of a plurality of transparent base materials joined to each other through one or more first joint surfaces, a functional element formed of an optical film being formed on each of the first joint surfaces;
a second substrate composed of a plurality of transparent base materials joined to each other through at least two second joint surfaces parallel to each other, a functional element formed of an optical film being formed on each of the second joint surfaces; and
a diffraction substrate with a diffraction grating provided on one face,
wherein the first substrate, the second substrate and the diffraction substrate are joined in this order;
at least one part of light incident on the first substrate is reflected from at least one of the first joint surfaces to be incident on the second substrate, and at least one part thereof is reflected from at least one of the second joint surfaces; and
a virtual plane including an incident light axis and a reflected light axis on the first joint surface and a virtual plane including an incident light axis and a reflected light axis on the second joint surface form an angle of substantially 45 degrees.

12. The optical element according to claim 11,
wherein a polarizing film having a transmittance and a reflectance with respect to a P-polarized light component different from those with respect to an S-polarized light component is formed on at least one of the first joint surfaces; and
at least one of the second joint surfaces is disposed on an optical path of a light beam resulting from light splitting at the first joint surface, and a polarizing film that substantially transmits a P-polarized light component and substantially reflects an S-polarized light component is formed on the at least one of the second joint surfaces.

13. An optical head, comprising:
a light source that emits linearly polarized light;
an objective lens that focuses the light emitted from the light source on an information recording medium;
an optical element as claimed in claim 11 that is disposed on an optical path between the light source and the objective lens; and
a photodetector that receives the light from the information recording medium, which is split into a plurality of light beams by the optical element.

14. The optical head according to claim 13,
wherein the light source and the photodetector are provided in a common housing.

15. The optical head according to claim 13,
wherein, of the plurality of light beams resulting from light splitting by the optical element that are directed towards the photodetector, one of a pair of light beams is focused on a near side of a light-receiving surface on the photodetector with respect to the optical element, and the other is focused on a far side of the light-receiving surface on the photodetector with respect to the optical element; and
each of the pair of light beams is received by a three-divided light-receiving region on the photodetector so that a focus error signal is obtained by performing a calculation.

16. The optical head according to claim 13,
wherein at least one of the plurality of light beams resulting from light splitting by the optical element that are directed towards the photodetector is received by a multi-divided light-receiving region on the photodetector so that a tracking error signal can be obtained by performing a calculation.

17. An optical element, comprising:
a first substrate composed of a plurality of transparent base materials joined to each other through one or more first joint surfaces, a functional element formed of an optical film being formed on each of the first joint surfaces;
a second substrate composed of a plurality of transparent base materials joined to each other through at least two second joint surfaces parallel to each other, a functional element formed of an optical film being formed on each of the second joint surfaces; and
a third substrate composed of a plurality of transparent base materials joined to each other through at least two third joint surfaces parallel to each other, a functional element formed of an optical film being formed on each of the third joint surfaces,
wherein the first substrate, the second substrate and the third substrate are joined in this order;
at least one part of light incident on the first substrate is reflected from at least one of the first joint surfaces to be incident on the second substrate, and one part thereof is reflected from at least one of the second joint surfaces, and the rest thereof is transmitted through the at least one of the second joint surfaces to be incident on the third joint surfaces; and
a virtual plane including an incident light axis and a reflected light axis on the first joint surface and a virtual plane including an incident light axis and a reflected light axis on the second joint surface form an angle of substantially 45 degrees.

18. The optical element according to claim 17,
wherein a polarizing film having a transmittance and a reflectance with respect to a P-polarized light component different from those with respect to an S-polarized light component is formed on at least one of the first joint surfaces;
at least one of the second joint surfaces is disposed on an optical path of a light beam resulting from light splitting at the first joint surface, and a polarizing film that substantially transmits a P-polarized light component and substantially reflects an S-polarized light component is formed on the at least one of the second joint surfaces; and
at least one of the third joint surfaces is disposed on an optical path of a light beam resulting from light splitting at the second joint surfaces, and a non-polarizing film that transmits one part of the light beam while reflecting another part of the light beam is formed on the at least one of the third joint surfaces.

19. The optical element according to claim 18,
wherein the virtual plane including the incident light axis and the reflected light axis on the first joint surface and a virtual plane including an incident light axis and a reflected light axis on the third joint surface are substantially parallel to each other.

20. An optical head, comprising:
a light source that emits linearly polarized light;
an objective lens that focuses the light emitted from the light source on an information recording medium;
an optical element as claimed in claim 17 that is disposed on an optical path between the light source and the objective lens; and
a photodetector that receives the light from the information recording medium, which is split into a plurality of light beams by the optical element.

21. The optical head according to claim 20,
wherein the light source and the photodetector are provided in a common housing.

22. The optical head according to claim 20,
wherein, of the plurality of light beams resulting from light splitting by the optical element that are directed towards the photodetector, one of a pair of light beams is focused on a near side of a light-receiving surface on the photodetector with respect to the optical element, and the other is focused on a far side of the light-receiving surface on the photodetector with respect to the optical element; and
each of the pair of light beams is received by a three-divided light-receiving region on the photodetector so that a focus error signal can be obtained by performing a calculation.

23. The optical head according to claim 20,
wherein at least one of the plurality of light beams resulting from light splitting by the optical element that are directed towards the photodetector is received by a multi-divided light-receiving region on the photodetector so that a tracking error signal can be obtained by performing a calculation.

24. An optical element, comprising:
a first substrate composed of one transparent base material or a plurality of transparent base materials joined to each other;
a second substrate composed of a plurality of transparent base materials joined to each other through at least two second joint surfaces parallel to each other, a functional element formed of an optical film being formed on each of the second joint surfaces; and
a third substrate composed of one transparent base material or a plurality of transparent base materials joined to each other,
wherein the first substrate, the second substrate and the third substrate are joined in this order;
at least one part of light incident on the first substrate is reflected from a first joint surface between the first substrate and the second substrate to be incident on the second substrate, and at least one part thereof is reflected from at least one of the second joint surfaces; and
a virtual plane including an incident light axis and a reflected light axis on the first joint surface and a virtual plane including an incident light axis and a reflected light axis on the second joint surface form an angle of substantially 45 degrees.

25. The optical element according to claim 24,
wherein a polarizing film having a transmittance and a reflectance with respect to a P-polarized light component different from those with respect to an S-polarized light component is formed on the first joint surface; and
a polarizing film that substantially transmits a P-polarized light component and substantially reflects an S-polarized light component is formed on at least one of the second joint surfaces.

26. An optical head, comprising:
a light source that emits linearly polarized light;
an objective lens that focuses the light emitted from the light source on an information recording medium;
an optical element as claimed in claim 24 that is disposed on an optical path between the light source and the objective lens; and
a photodetector that receives the light from the information recording medium, which is split into a plurality of light beams by the optical element.

27. The optical head according to claim 26,
wherein the light source and the photodetector are provided in a common housing.

28. The optical head according to claim 26,
wherein, of the plurality of light beams resulting from light splitting by the optical element that are directed towards the photodetector, one of a pair of light beams is focused on a near side of a light-receiving surface on the photodetector with respect to the optical element, and the other is focused on a far side of the light-receiving surface on the photodetector with respect to the optical element; and
each of the pair of light beams is received by a three-divided light-receiving region on the photodetector so that a focus error signal can be obtained by performing a calculation.

29. The optical head according to claim 26,
wherein at least one of the plurality of light beams resulting from light splitting by the optical element that are directed towards the photodetector is received by a multi-divided light-receiving region on the photodetector so that a tracking error signal can be obtained by performing a calculation.

30. An optical element, comprising:
a first substrate composed of a plurality of transparent base materials and a 1/4 wavelength plate that are joined to each other, and at least one of joint surfaces between the plurality of transparent base materials is a first joint surface on which a functional element formed of an optical film is formed; and
a second substrate composed of a plurality of transparent base materials joined to each other through at least two second joint surfaces parallel to each other, a functional element formed of an optical film being formed on each of the second joint surfaces,
wherein the first substrate and the second substrate are joined to each other; and
a polarizing film that substantially transmits a P-polarized light component and substantially reflects an S-polarized light component is formed on the first joint surface.

31. An optical head, comprising:
a light source that emits linearly polarized light;
an objective lens that focuses the light emitted from the light source on an information recording medium;
an optical element as claimed in claim 30 that is disposed on an optical path between the light source and the objective lens; and
a photodetector that receives the light from the information recording medium, which is split into a plurality of light beams by the optical element.

32. The optical head according to claim 31,
wherein the light source and the photodetector are provided in a common housing.

33. The optical head according to claim 31,
wherein, of the plurality of light beams resulting from light splitting by the optical element that are directed towards the photodetector, one of a pair of light beams is focused on a near side of a light-receiving surface on the photodetector with respect to the optical element, and the other is focused on a far side of the light-receiving surface on the photodetector with respect to the optical element; and
each of the pair of light beams is received by a three-divided light-receiving region on the photodetector so that a focus error signal can be obtained by performing a calculation.

34. The optical head according to claim 31,
wherein at least one of the plurality of light beams resulting from light splitting by the optical element that are directed towards the photodetector is received by a multi-divided light-receiving region on the photodetector so that a tracking error signal can be obtained by performing a calculation.

35. A method of manufacturing an optical element, comprising the steps of:
obtaining a first substrate using a first laminate member composed of a plurality of transparent substrates joined to each other through a first joint surface on which a functional element formed of a diffraction grating or an optical film is formed, in which the first laminate member is cut along a plurality of first cutting surfaces parallel to each other that cross the first joint surface at an angle of substantially 45 degrees so that at least one of the first joint surfaces is provided in the first substrate;
obtaining a second substrate using a second laminate member composed of a plurality of transparent substrates joined to each other through a second joint surface on which a functional element formed of a diffraction grating or an optical film is formed, in which the second laminate member is cut along a plurality of second cutting surfaces parallel to each other that cross the second joint surface at an angle of substantially 45 degrees so that at least two of the second joint surfaces are provided in the second substrate;
obtaining a composite member of the first substrate and the second substrate that are joined to each other, in which one of the first cutting surfaces and one of the second cutting surfaces are joined so that a first direction of the first substrate and a second direction of the second substrate form an angle of substantially 45 degrees, where a direction that is orthogonal to a straight line at which the first cutting surface and the first joint surface cross each other, and is parallel to the first cutting surface is the first direction of the first substrate, and a direction that is orthogonal to a straight line at which the second cutting surface and the second joint surface cross each other, and is parallel to the second cutting surface is the second direction of the second substrate; and
cutting the composite member.

36. A method of manufacturing an optical element, comprising the steps of:
forming a functional element formed of an optical film on one face of a first glass plate;
obtaining a second substrate using a second laminate member composed of a plurality of transparent substrates joined to each other through a second joint surface on which a functional element formed of an optical film is formed, in which the second laminate member is cut along a plurality of second cutting surfaces parallel to each other that cross the second joint surface at an angle of substantially 45 degrees so that at least two of the second joint surfaces are provided in the second substrate;
obtaining a composite member of the first glass plate, the second substrate and a third glass plate that are joined in this order, in which one of the second cutting surfaces of the second substrate is joined to the optical film of the first glass plate, and the other of the second cutting surfaces of the second substrate is joined to the third glass plate; and
cutting the composite member.

37. A method of manufacturing an optical element, comprising the steps of:
obtaining a first substrate using a first laminate member composed of a plurality of transparent substrates joined to each other through a first joint surface on which a functional element formed of an optical film is formed, in which the first laminate member is cut along a plurality of first cutting surfaces parallel to each other that cross the first joint surface at an angle of substantially 45 degrees so that at least one of the first joint surfaces is provided in the first substrate;
obtaining a second substrate using a second laminate member composed of a plurality of transparent substrates joined to each other through a second joint surface on which a functional element formed of an optical film is formed, in which the second laminate member is cut along a plurality of second cutting surfaces parallel to each other that cross the second joint surface at an angle of substantially 45 degrees so that at least two of the second joint surfaces are provided in the second substrate;
obtaining a composite member of the first substrate, the second substrate and a glass plate that are joined in this order, in which one of the first cutting surfaces and one of the second cutting surfaces are joined so that a first direction of the first substrate and a second direction of the second substrate form an angle of substantially 45 degrees, and the second substrate is joined to the glass plate, where a direction that is orthogonal to a straight line at which the first cutting surface and the first joint surface cross each other, and is parallel to the first cutting surface is the first direction of the first substrate, and a direction that is orthogonal to a straight line at which the second cutting surface and the second joint surface cross each other, and is parallel to the second cutting surface is the second direction of the second substrate; and
cutting the composite member.

38. The method according to claim 37,
wherein the glass plate has a diffraction grating provided on one face, and the other face of the glass plate opposite the one face is joined to the second substrate.

39. A method of manufacturing an optical element, comprising the steps of:
obtaining a first substrate using a first laminate member composed of a plurality of transparent substrates joined to each other through a first joint surface on which a functional element formed of an optical film is formed, in which the first laminate member is cut along a plurality of first cutting surfaces parallel to each other that cross the first joint surface at an angle of substantially 45 degrees so that at least one of the first joint surfaces is provided in the first substrate;
obtaining a second substrate using a second laminate member composed of a plurality of transparent substrates joined to each other through a second joint surface on which a functional element formed of an optical film is formed, in which the second laminate member is cut along a plurality of second cutting surfaces parallel to each other that cross the second joint surface at an angle of substantially 45 degrees so that at least two of the second joint surfaces are provided in the second substrate;
obtaining a third substrate using a third laminate member composed of a plurality of transparent substrates joined to each other through a third joint surface on which a functional element formed of an optical film is formed, in which the third laminate member is cut along a plurality of third cutting surfaces parallel to each other that cross the third joint surface at an angle of substantially 45 degrees so that at least two of the third joint surfaces are provided in the third substrate;
obtaining a composite member of the first substrate, the second substrate and the third substrate that are joined in this order, in which one of the first cutting surfaces and one of the second cutting surfaces are joined so that a first direction of the first substrate and a second direction of the second substrate form an angle of substantially 45 degrees, and the second substrate is joined to the third substrate, where a direction that is orthogonal to a straight line at which the first cutting surface and the first joint surface cross each other, and is parallel to the first cutting surface is the first direction of the first substrate, and a direction that is orthogonal to a straight line at which the second cutting surface and the second joint surface cross each other, and is parallel to the second cutting surface is the second direction of the second substrate; and
cutting the composite member.

40. The method according to claim 39,
wherein one of the second cutting surfaces and one of the third cutting surfaces are joined so that the first direction of the first substrate and a third direction of the third substrate are substantially parallel to each other, where the direction that is orthogonal to the straight line at which the first cutting surface and the first joint surface cross each other, and is parallel to the first cutting surface is the first direction of the first substrate, and a direction that is orthogonal to a straight line at which the third cutting surface and the third joint surface cross each other, and is parallel to the third cutting surface is the third direction of the third substrate.

41. A method of manufacturing an optical element, comprising the steps of:
obtaining a first substrate using a first laminate member composed of a plurality of transparent substrates joined to each other through a first joint surface on which a functional element formed of an optical film is formed, and a 1/4 wavelength plate, which are joined to each other, in which the first laminate member is cut along a plurality of first cutting surfaces parallel to each other that cross the first joint surface at an angle of substantially 45 degrees so that at least one of the first joint surfaces is provided in the first substrate;
obtaining a second substrate using a second laminate member composed of a plurality of transparent substrates joined to each other through a second joint surface on which a functional element formed of a diffraction grating or an optical film is formed, in which the second laminate member is cut along a plurality of second cutting surfaces parallel to each other that cross the second joint surface at an angle of substantially 45 degrees so that at least two of the second joint surfaces are provided in the second substrate;
obtaining a composite member of the first substrate and the second substrate that are joined to each other by joining one of the first cutting surfaces to one of the second cutting surfaces; and
cutting the composite member.

42. A method of manufacturing an optical element, comprising the steps of:
obtaining a first substrate using a first laminate member composed of a plurality of transparent substrates joined to each other through a first joint surface on which a functional element formed of an optical film is formed, in which the first laminate member is cut along a plurality of first cutting surfaces parallel to each other that cross the first joint surface at an angle of substantially 45 degrees so that at least one of the first joint surfaces is provided in the first substrate;
obtaining a second substrate using a second laminate member composed of a plurality of transparent substrates joined to each other through a second joint surface on which a functional element formed of an optical film is formed, in which the second laminate member is cut along a plurality of second cutting surfaces parallel to each other that cross the second joint surface at an angle of substantially 35 degrees so that at least two of the second joint surfaces are provided in the second substrate;
obtaining a third substrate, in which the second substrate and transparent substrates are joined alternately, and a joined body thus obtained is cut along a plurality of third cutting surfaces parallel to each other that cross a third joint surface between the second substrate and the transparent substrates at an angle of substantially 45 degrees;
obtaining a composite member of the first substrate and the third substrate that are joined to each other, in which one of the first cutting surfaces and one of the third cutting surfaces are joined so that a first direction of the first substrate and a third direction of the third substrate are parallel to each other, where a direction that is orthogonal to a straight line at which the first cutting surface and the first joint surface cross each other, and is parallel to the first cutting surface is the first direction of the first substrate, and a direction that is orthogonal to a straight line at which the third cutting surface and the third joint surface cross each other, and is parallel to the third cutting surface is the third direction of the third substrate; and
cutting the composite member.

43. A method of manufacturing an optical element, comprising the steps of:
obtaining a first substrate using a first laminate member composed of a plurality of transparent substrates joined to each other through a first joint surface on which a functional element formed of an optical film is formed, in which the first laminate member is cut along a plurality of first cutting surfaces parallel to each other that cross the first joint surface at an angle of substantially 45 degrees so that at least one of the first joint surfaces is provided in the first substrate;
obtaining a second substrate using a second laminate member composed of a plurality of transparent substrates joined to each other through a second joint surface on which a functional element formed of an optical film is formed, in which the second laminate member is cut along a plurality of second cutting surfaces parallel to each other that cross the second joint surface at an angle of substantially 30 degrees so that at least two of the second joint surfaces are provided in the second substrate;
obtaining a third substrate, in which the second substrate and transparent substrates are joined alternately, and a joined body thus obtained is cut along a plurality of third cutting surfaces parallel to each other that cross a third joint surface between the second substrate and the transparent substrates at an angle of substantially 35 degrees;
obtaining a composite member of the first substrate and the third substrate that are joined to each other, in which one of the first cutting surfaces and one of the third cutting surfaces are joined so that a first direction of the first substrate and a third direction of the third substrate are parallel to each other, where a direction that is orthogonal to a straight line at which the first cutting surface and the first joint surface cross each other, and is parallel to the first cutting surface is the first direction of the first substrate, and a direction that is orthogonal to a straight line at which the third cutting surface and the third joint surface cross each other, and is parallel to the third cutting surface is the third direction of the third substrate.
